(19) Europäisches Patentamt
European Patent Office
Office européen des brevets

(11) **EP 2 139 153 A1**

(12) **EUROPEAN PATENT APPLICATION**
published in accordance with Art. 153(4) EPC

(43) Date of publication:
**30.12.2009 Bulletin 2009/53**

(51) Int Cl.:
***H04L 9/08*** (2006.01)

(21) Application number: **08704422.8**

(22) Date of filing: **04.02.2008**

(86) International application number:
**PCT/JP2008/051745**

(87) International publication number:
**WO 2008/114540 (25.09.2008 Gazette 2008/39)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **20.03.2007 JP 2007073172**

(71) Applicant: **Sony Corporation Tokyo 108-0075 (JP)**

(72) Inventors:
• **ASANO, Tomoyuki Tokyo 108-0075 (JP)**
• **KUSAKAWA, Masafumi Tokyo 108-0075 (JP)**

(74) Representative: **Robinson, Nigel Alexander Julian D Young & Co 120 Holborn London EC1N 2DY (GB)**

(54) **KEY PROVIDING SYSTEM, KEY PROVIDING APPARATUS, TERMINAL APPARATUS, KEY PROVIDING METHOD, AND KEY GENERATING METHOD**

(57) A key providing apparatus for providing a key used for encryption or decryption of data to a predetermined terminal device is provided. The key providing apparatus includes an acquiring unit for acquiring a digraph formed by arranging at least one directional branch connecting the coordinate points on a coordinate axis having a plurality of coordinate points each corresponded with a subset representing a combination of a plurality of terminal devices, an extracting unit for extracting information of all the directional branches contained in the directional path connecting a starting point of the digraph and a predetermined coordinate point, and a key generation unit for generating a key corresponded to a subset to which a predetermined terminal deice belongs based on the digraph, where the information of the directional branch is provided to the predetermined terminal device.

**FIG. 8**

**Description**

Technical Field

The present invention relates to a key providing system, a key providing apparatus, a terminal device, a key providing method, and a key generation method.

Background Art

Information devices such as personal computer (hereinafter referred to as PC), portable telephone, and digital home electrical appliance are recently being widespread used in general. The technique related to such information devices and information communication connecting such devices is greatly advancing, and content distribution service such as music distribution and video distribution using such information device is being widely developed. Pay broadcasting using CATV (Community Antenna TeleVision), satellite broadcast or Internet, and content distribution using physical media such as CD (Compact Disc) or DVD (Digital Versatile Disc) are examples of the content distribution service.

However, in order to provide such content distribution service, a mechanism allowing only the contractant to acquire the content based on the contract made between the provider of the service (hereinafter referred to as system manager) and the viewer is necessary. With respect to such issue, a mechanism of providing a predetermined key from the system manager to the contractant, and distributing header information h for generating a content key mek used to encrypt content M with the predetermined key along with the encrypted content M is contrived.

A content distribution system called the broadcast encryption system is known as one specific means for realizing such mechanism. The broadcast encryption system is a system of corresponding each contract with an element of a set, and then dividing the contractant set representing the entire contractant into a plurality of subsets, and distributing the header h such that only the contractant belonging to a specific subset acquires the content key mek. That is, the content M can be distributed excluding the specific contractant specified by the system manager by applying such system. In reality, however, the broadcast encryption system of the related art is desirably more efficient in view of the calculation load associated with the generation of the content key mek at the server device (hereinafter referred to as center) on the system manager side and the terminal device on the contractant side, the communication load between the server device and the terminal device, and the like.

Specifically, when distributing the content, to what extent the amount of communication that increases according to the size of the header h distributed by the center, the amount of memory that increases according to the number of keys to be held by each terminal device, and the amount of calculation necessary for each terminal device to generate the content key mek can be reduced becomes an issue. Each amount greatly differs depending on the dividing method of the contractant set. Various broadcast encryption systems devising the dividing method of the contractant set have been proposed to realize efficient content distribution. For instance, Non-Patent Document 1 discloses a content distribution system called the Subset Incremental Chain Based Broadcast Encryption system by Nuttapong Attrapadung and Hideki Imai et al. as one means for reducing each amount (hereinafter referred to as AI05 system).

[Non-Patent Document 1] Nuttapong Attrapadung and Hideki Imai, "Subset Incremental Chain Based Broadcast Encryption with Shorter Ciphertext", The 28th Symposium on Information Theory and Its Applications (SITA2005)

Disclosure of the Invention

The applicant of the present invention developed a first improved system (hereinafter referred to as A06(A) system) in which the amount of memory for each terminal device to hold the key can be reduced, a second improved system (hereinafter referred to as A06(B) system) in which the amount of calculation for each terminal device to generate the content key can be reduced, and a third improved system (hereinafter referred to as A06(A+B) system) in which the amount of memory and the amount of calculation can be reduced than the content distribution system described in Non-Patent Document 1, and has already been filed for patent to Japanese Patent Office (A06(A) system: Japanese Application No. 2006-310182, A06(B) system: Japanese Application No. 2006-310213, A06(A+B) system: Japanese Application No. 2006-310226). The characteristics of each system lie in that when generating the content key mek utilizing a pseudo random sequence generator, the pseudo random sequence generation calculation is executed based on a key generation algorithm represented by a digraph unique to each system.

However, when generating a key corresponding to a subset from a key corresponding to another subset according to a certain system, not limited to each system above, if the set related information such as the digraph including information of a plurality of key generation paths are all to be held on the terminal device side, the storage capacity to hold the information of the plurality of key generation paths becomes large. If the terminal device is to acquire all the information of the key generation path held by the key providing apparatus, the capacity propagated for the terminal device to acquire the information of the plurality of key generation paths becomes large.

The present invention addresses the above-identified, and other issues associated with conventional methods and apparatuses, and it is desirable to provide a new and improved key providing system capable of reducing the capacity necessary for the terminal device to propagate or hold the information for key generation compared to when the terminal device propagates or holds all the key generation path information in advance, a key providing apparatus, a terminal device, a key providing method, and a key generation method.

According to an embodiment of the present invention, there is provided a key providing system including a plurality of terminal devices, and a key providing apparatus for providing key information used for encryption or decryption of information to the plurality of terminal devices.

Further, the key providing apparatus may include a set relationship information acquiring unit for acquiring set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information, a key generation path information extracting unit for extracting the key generation path information of one part of the plurality of key generation path information from the plurality of key generation path information contained in the set relationship information, and a key generation path information providing unit for providing the key generation path information of one part extracted by the key generation path information extracting unit to the terminal device.

Furthermore, the terminal device may include a key generation path information acquiring unit for acquiring the key generation path information of one part, and a key information generation unit for generating, from the key information corresponding to one of the plurality of set information, key information corresponding to another one of the plurality of set information based on the key generation path information of one part.

According to another embodiment of the present invention, there is provided a key providing apparatus for providing key information used for encryption or decryption of data to a plurality of terminal devices. The key providing apparatus includes a set relationship information acquiring unit for acquiring set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information; a key generation path information extracting unit for extracting the key generation path information of one part of the plurality of key generation path information from the plurality of key generation path information contained in the set relationship information; and a key generation path information providing unit for providing the key generation path information of one part extracted by the key generation path information extracting unit to the terminal device.

Further, the key generation path information providing unit may include a communication unit for transmitting the key generation path information to the terminal device through a network.

Further, the key generation path information providing unit may include a recording unit for recording the key generation path information to a recording medium to provide to the terminal device.

Also, the key providing apparatus may further include an encryption unit for encrypting information using the key information corresponding to one of the plurality of set information; and an encrypted information providing unit for providing the encrypted information to the terminal device.

Further, the key generation path information acquiring unit may be configured to acquire, as the set relationship information, a digraph formed by directional branches connecting coordinate points with respect to a plurality of coordinate points corresponded to the plurality of set information each indicating different combinations of the plurality of terminal devices.

Further, the key generation path information extracting unit may be configured to extract, as the key generation path information of one part, one part of the digraph reaching a coordinate point corresponded to the set information to which the terminal device belongs.

Further, the key generation path information extracting unit may be configured to extract, as the key generation path information of one part, information indicating a terminating end position of the directional branch configuring one part of the digraph.

Further, the key generation path information extracting unit may be configured to extract, as the key generation path information of one part, information indicating a length of the directional branch configuring one part of the digraph.

Also, the key providing may further include a key information generation unit for generating the key information $k(S_1)$, ..., $k(S_m)$ corresponding to coordinate points $S_1$, ..., $S_m$ of the terminating ends of all directional branches having a coordinate point So as the starting end according to the input of the key information $k(S_0)$ corresponding to the coordinate point So.

Further, the key information may be configured by a set key k for encrypting or decrypting information, and an intermediate key t for generating the set key k. Furthermore, the key providing apparatus may further include a key information generation unit for generating the set key $k(S_0)$ corresponding to the coordinate point So and the intermediate key $t(S_1)$, ..., $t(S_m)$ corresponding to coordinate points $S_1$, ..., $S_m$ of the terminating ends of all directional branches having a coordinate point So as the starting end according to the input of the intermediate key $t(S_0)$ corresponding to the coordinate point So.

According to another embodiment of the present invention, there is provided a key providing apparatus for providing key information used for encryption or decryption of information to a plurality of terminal devices. The key providing apparatus includes: a set relationship information generation unit for generating set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information; a key generation path information extracting unit for extracting the key generation path information of one part of the plurality of key generation path information from the plurality of key generation path information contained in the set relationship information; and a key generation path information providing unit for providing the key generation path information of one part extracted by the key generation path information extracting unit to the terminal device.

According to another embodiment of the present invention, there is provided a terminal device for generating key information used for encryption or decryption of information. The terminal device includes: a key generation path information acquiring unit for acquiring key generation path information of one part of a plurality of key generation path information extracted from set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information; and a key information generation unit for generating, from the key information corresponding to one of the plurality of set information, key information corresponding to another one of the plurality of set information based on the key generation path information of one part.

Further, the key generation path information acquiring unit may include a communication unit for receiving the key generation path information through a network.

Further, the key generation path information acquiring unit may include a readout unit for acquiring a recording medium recorded with the key generation path information and reading out the key generation path information from the recording medium.

Also, the terminal device may further includes: an encrypted information acquiring unit for acquiring information encrypted using the key information corresponding to another one of the plurality of set information; and an encrypted information decryption unit for decrypting the encrypted information using the key information corresponding to another one of the plurality of set information generated by the key information generation unit.

Further, the key generation path information acquiring unit may be configured to acquire, with respect to a plurality of coordinate points corresponded to the plurality of set information each indicating different combinations of the plurality of terminal devices, one part of a digraph reaching a coordinate point corresponded to the set information to which the terminal device belongs extracted from the digraph formed by directional branches connecting the coordinate points as the key generation path information of one part.

Further, the key generation path information acquiring unit may be configured to acquire, as the key generation path information of one part, information indicating a terminating end position of the directional branch configuring one part of the digraph.

Further, the key generation path information acquiring unit may be configured to acquire, as the key generation path information of one part, information indicating a length of the directional branch configuring one part of the digraph.

Also, the terminal device may further include a key information generation unit for generating the key information $k(S_1)$ corresponding to a coordinate point $S_1$ of the terminating end of the directional branch according to an input of the key information $k(S_0)$ corresponding to a starting end So of the directional branch.

Further, the key information may be configured by a set key k for encrypting or decrypting information, and an intermediate key t for generating the set key k. Furthermore, the terminal device may further include a key information generation unit for generating the set key $k(S_0)$ corresponding to a starting end So of the directional branch and the intermediate key $t(S_1)$ corresponding to a terminating end $S_1$ of the directional branch according to an input of the intermediate key $t(S_0)$ corresponding to the starting end So of the directional branch.

According to another embodiment of the present invention, there is provided a key providing method for providing key information used for encryption or decryption of data to a plurality of terminal devices. The key providing method includes the steps of: acquiring set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information; extracting the key generation path information of one part of the plurality of key generation path information from the plurality of key generation path information contained in the set relationship information; and providing the key generation path information of one part extracted by the key generation path information extracting unit to the terminal device.

According to another embodiment of the present invention, there is provided a key generation method for generating key information used for encryption or decryption of information. The key generation method includes the steps of: acquiring key generation path information of one part of a plurality of key generation path information extracted from set relationship information including a plurality of set information each indicating different combinations of a plurality of terminal devices and a plurality of key generation path information indicating a key generation path for generating, from the key information corresponding to one of the plurality of set information, key information corresponding to another one of the plurality of set information; and generating, from the key information corresponding to one of the plurality of set information, key information corresponding to another one of the plurality of set information based on the key generation path information of one part.

According to each configuration described above, the key generation path information of one part extracted by the key providing apparatus is provided to the terminal device, and the terminal device derives, from the key corresponding to one set, a key corresponding to another set, and thus the capacity necessary for propagating the key generation path information from the key providing apparatus to the terminal device can be limited compared to when receiving the provision of all the key generation path information held in the key providing apparatus. Furthermore, the capacity required by the terminal device for holding the key generation path information can be limited compared to when the terminal device holds all the key generation path information in advance.

According to the present invention described above, the capacity necessary for the terminal device to propagate or hold the information for key generation can be reduced compared to when the terminal device propagates or holds all the key generation path information in advance.

Brief Description of the Drawings

FIG. 1 is an explanatory view showing a configuration of a key providing system 100 according to first and second embodiments of the present invention;

FIG. 2 is an explanatory view showing a hardware configuration of a key distribution server 102 and a terminal device 122 according to the embodiment;

FIG. 3 is an explanatory view showing a structure of a logical binary tree according to the embodiment;

FIG. 4 is an explanatory view showing a digraph H according to the AI05 system;

FIG. 5 is an explanatory view showing a flow of a key distribution process according to the AI05 system;

FIG. 6 is an explanatory view showing a flow of a key distribution process according to the AI05 system;

FIG. 7 is an explanatory view showing a decryption process of an encrypted text according to the present embodiment;

FIG. 8 is an explanatory view showing a function configuration of the key distribution server 102 according to the present embodiment;

FIG. 9 is an explanatory view showing a flow of a process for generating a temporary digraph I' according to a A06 (A+B) system;

FIG. 10 is an explanatory view showing the temporary digraph I' of the A06(A+B) system;

FIG. 11 is an explanatory view showing a flow of a process for generating a digraph I according to the A06(A+B) system;

FIG. 12 is an explanatory view showing a flow of a process for generating a digraph I according to the A06(A+B) system;

FIG. 13 is an explanatory view showing a flow of a process for generating a digraph I according to the A06(A+B) system;

FIG. 14 is an explanatory view showing a flow of a process for generating a digraph I according to the A06(A+B) system;

FIG. 15 is an explanatory view showing the digraph I of the A06(A+B) system;

FIG. 16 is an explanatory view showing an example of a directional path referenced when applying the embodiment to the digraph H of the AI05 system;

FIG. 17 is an explanatory view showing an example of a directional path referenced when applying the embodiment to the digraph H of the AI05 system;

FIG. 18 is an explanatory view showing an example of a directional path referenced when applying the embodiment to the digraph I of the A06(A+B) system;

FIG. 19 is an explanatory view showing a function configuration of a terminal device 122 according to the present embodiment;

FIG. 20 is an explanatory view showing a flow of a key generation process according to a first embodiment of the present invention;

FIG. 21 is an explanatory view showing a flow of a key generation process according to a second embodiment of the present invention;

FIG. 22 is an explanatory view showing a configuration of a broadcast encryption system 300 serving as an application example of the first and second embodiments of the present invention; and

FIG. 23 is an explanatory view showing a configuration of a broadcast encryption system 400 serving as an application example of the first and second embodiments of the present invention.

Explanation of Reference Numerals

| | |
|---|---|
| 100 | key providing system |
| 102 | key distribution server |
| 104 | tree structure setting unit |
| 106 | coordinate axis setting unit |
| 108 | temporary digraph generation unit |
| 110 | digraph generation unit |
| 112 | initial intermediate key setting unit |
| 114 | key generation unit |
| 116 | encryption unit |
| 118 | communication unit |
| 120 | subset determination unit |
| 121 | path information generation unit |
| 122 | terminal device |
| 124 | communication unit |
| 126 | judgment unit |
| 128 | key generation unit |
| 130 | decryption unit |
| 202 | controller |
| 204 | calculation unit |
| 206 | input/output interface |
| 208 | secure storage unit |
| 210 | main storage unit |
| 212 | network interface |
| 216 | media interface |
| 218 | information media |

Best Mode for Carrying out the Invention

Hereinafter, preferred embodiments of the present invention will be described in detail with reference to the appended drawings. Note that, in this specification and the appended drawings, configuring elements that have substantially the same function configuration are denoted with the same reference numerals, and redundant explanation of these configuring elements will be omitted.

<First embodiment>

The configuration of a key providing system 100 according to a first embodiment of the present invention and the specific system related to key distribution will be described in detail below.

[Outline]

Prior to describing the configuration of the key providing system 100 according to the present embodiment in detail, the outline of the key distribution system according to the present embodiment will be briefly described.

The present embodiment can be applied to various key distribution systems, but a case of applying the present embodiment to the AI05 system and the A06(A+B) system will be described by way of example for the sake of convenience of the explanation. The basic idea of the AI05 system and the like to which the present embodiment can be applied will be briefly described.

In the AI05 system and the like, a set of the entire terminal device with each terminal device contained in the key distribution system corresponded to the element of the set is considered, similar to the normal broadcast encryption

6

system. The key distribution is executed using a plurality of subsets obtained by dividing the set. That is, the subset represents the combination of the terminal devices. First, the key distribution server forms a binary tree (BT) and corresponds each terminal device to a leaf node. The key distribution server then generates a plurality of "sets of subsets" having the subset as the element according to a predetermined rule, and corresponds the each set of subsets to a root node and each intermediate node of the BT. The key distribution server associates the plurality of subsets contained in the set of subsets based on a predetermined rule (hereinafter sometimes referred to as jump). The relationship between the subsets is represented by a digraph or a directional branch. The set and the subset, which is the element of the set, are examples of set information. The digraph generated by the AI05 system and the like is an example of set relationship information. Furthermore, the directional branch configuring the same is an example of key generation path information. However, the key generation path information is information representing the key generation path configured by one or more directional branches or the digraph corresponding to an empty set.

The digraph is formed on a coordinate axis in which each subset contained in the set of subsets is corresponded to each coordinate point, and is configured by the directional branch connecting a plurality of coordinate points based on the jump. The key distribution server forms, for every set of subsets corresponded to the root node and each intermediate node contained in the BT, a digraph representing the relationship among the plurality of subsets contained in the set of subsets.

Further, the key distribution server selects a subset including a terminal device, which is the distributing destination, and specifies the digraph containing the relevant subset. The key distribution server generates a key by repeating a calculation by a pseudo random sequence generator (PRSG) based on the specified digraph. The feature of the AI05 system lies in dividing the set representing all terminal devices to subsets to reduce the amount of communication, the number of keys to be held by each terminal device, and the amount of calculation for each terminal device to generate the key compared to the broadcast encryption system of the related art. Therefore, in the key distribution system applied with the AI05 system and the like, the key to distribute to each terminal device can be generated using the digraph.

The A06(A) system is improved from the AI05 system such that the number of keys to be held by each terminal device is reduced by applying a process of shortening the length of the directional branch configuring the digraph. The A06(B) system is improved from the AI05 system such that the amount of calculation for each terminal device to generate the key is reduced by forming the digraph so that the length of the directional branch becomes long. Moreover, the A06 (A+B) system is improved from the AI05 system such that the amount of calculation for the key generation and the number of keys to be held by each terminal device are reduced by replacing a predetermined directional branch with the short directional branch, similar to the A06(A) system, after forming the digraph of long directional branch, similar to the A06(B) system. Therefore, the load on the terminal device can be reduced than the AI05 system by applying each system of A06(A), A06(B), and A06(A+B).

However, in the AI05 system and the like, how to acquire the information of the digraph necessary for each terminal device to generate the key is not clearly disclosed, and there exists a silent assumption that each terminal device holds all information of the digraph in advance or that each terminal device generates digraph on its own based on an algorithm same as the key distribution server. However, in view of the realistic situation, the amount of information of the digraph to be held by each terminal device and the amount of calculation for generating the digraph are enormous assuming the number of terminal devices contained in the key providing system, and thus they are difficult to realize in a limited resource of the general terminal device.

More specifically, considering the case of the A06(B) system, the number n of terminal devices contained in the key providing system is normally about $n = 2^{32}$, and thus the amount of information to be held by each terminal device is about 32 GByte even if the information of one directional branch is expressed with about 4 byte. When each terminal device generates the digraph, (n-1) directional branches are calculated with respect to the number n of terminal devices $n = 2^{32}$, and thus the calculation load for each terminal device to generate the digraph is very large.

Each system merely suggests using the information of each digraph held by each terminal device in advance when each terminal device generates the content key mek, and specific means are not shown. As described above, if the number of contractant is large, the amount of information of the digraph to be held by each terminal device becomes enormous, and thus it is realistically difficult to store such information in the terminal device. When each terminal device calculates the digraph, the amount of calculation of each terminal device becomes enormous and becomes difficult to realize.

The key distribution server according to the present embodiment has a configuration of providing the information of the digraph necessary for each terminal device to generate the key. Further, each terminal device has a configuration of executing the pseudo-random sequence calculation based on the information of the digraph acquired from the key distribution server and generating the necessary key.

The key distribution system to which the present embodiment can be applied has been briefly described. It should be recognized that the key distribution system to which the present embodiment can be applied is not limited to each system of AI05, A06(A), A06(B), and A06(A+B), and the present embodiment may be applied to other key distribution systems. A case of applying the present embodiment to the AI05 system and the A06(A+B) system will be described in detail below for the sake of convenience of the explanation, but application means to other key distribution systems can be easily contrived by those skilled in the art based on the relevant description.

[Configuration of key providing system 100]

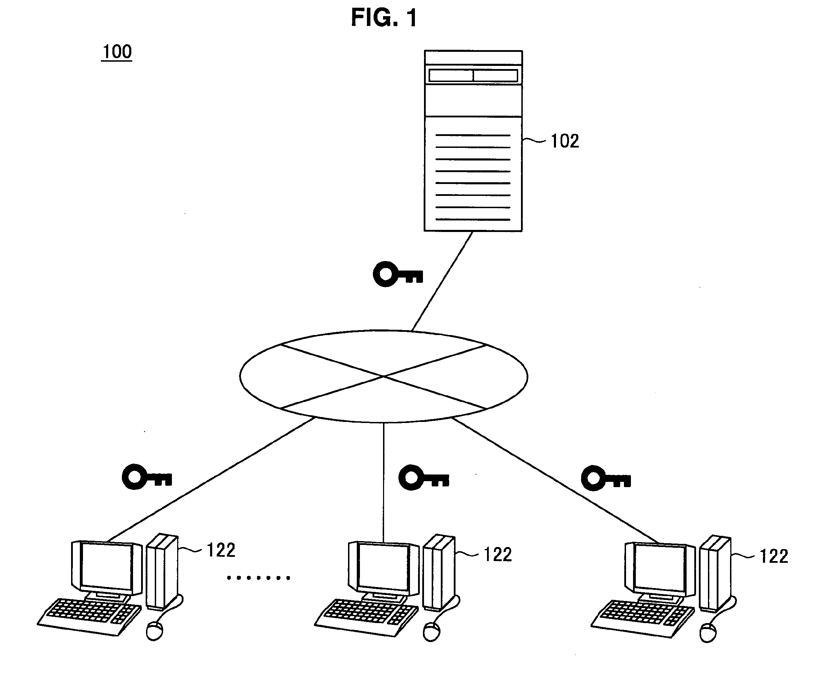

The configuration of the key providing system 100 according to the first embodiment of the present invention will be briefly described with reference to FIG. 1. FIG. 1 is an explanatory view showing a configuration of the key providing system 100 according to the present embodiment.

With reference to FIG. 1, the key providing system 100 is mainly configured by a key distribution server 102, terminal devices 122, and a network 10. The key distribution server 102 is an example of a key providing apparatus.

(Network 10)

The network 10 is a communication line network for connecting the key distribution server 102 and the terminal device 122 in bidirectional communication or one-way communication. The network 10 is configured by a public line network such as Internet, telephone line network, satellite communication network, and broadcast communication path, and dedicated line network such as WAN (Wide Area Network), LAN (Local Area Network), IP-VPN (Internet Protocol-Virtual Private Network), and wireless LAN, and may be wired or wireless.

(Key distribution server 102)

The key distribution server 102 can encrypt and distribute various electronic data in time of content distribution. For instance, the key distribution server 102 can generate a content key for encrypting or decrypting the content and distribute the same. The content key may be expressed with a random sequence (pseudo-random sequence) calculated by the pseudo-random sequence generator, a predetermined character string, numerical sequence, or the like. The content key may also be configured by an encryption content key and a decryption content key. The key distribution server 102 can also encrypt the content based on a predetermined encryption logic using the content key. Furthermore, the key distribution server 102 can distribute one or both of the content and the content key to an arbitrary terminal device 122.

The key distribution server 102 can generate a plurality of set keys for encrypting or decrypting the content key. In this case, the key distribution server 102 generates a plurality of set keys based on a predetermined digraph using the pseudo-random sequence generator. The key distribution server 102 encrypts the content key using each set key, and distributes the encrypted content key to a predetermined terminal device 122. Furthermore, the key distribution server 102 can distribute information of the digraph used to generate the predetermined set key to the predetermined terminal device 122. The set key is an example of the key information. The content key is an example of information encrypted/decrypted by the key information.

The plurality of set keys is corresponded to a subset group of a plurality of contractants selected from great number of contractants, and the key distribution server 102 generates a set key such that only the set of the contractant permitted the reproduction of the content (hereinafter referred to as permitted contractant) can decrypt the content key, encrypts the content key using the same, and distributes the encrypted content key to the terminal device 122 of all the contractants. The key distribution server 102 is thus configured to encrypt and distribute not only the content but also the content key. It should be recognized that a security level of a certain extent can be ensured by encrypting and distributing the content, but more advantageously, the content key is encrypted and distributed to flexibly respond to addition or deletion of the contractant permitted the use of the content from the great number of contractants.

According to the above configuration, only the predetermined terminal device 122 can decrypt the encrypted content key, and thus only the predetermined terminal device 122 can decrypt and view the content. When the set of permitted contractant is changed, the key distribution server 102 can respond to such change by changing the set key used in encrypting the content key.

The pseudo-random sequence generator is a device or a program capable of outputting a pseudo-random sequence of a long period by inputting a predetermined seed value, and is realized using logic such as linear congruential method and Mersenne Twister method. It should be noted that the pseudo-random sequence generator applicable to the present embodiment is not limited thereto, and may generate the pseudo-random sequence using other logics, or may be a device or a program capable of generating the pseudo-random sequence including special information or condition.

The key distribution server 102 is configured by an information processing device such as personal computer (PC) having a server function, and can transmit various types of information to an external device via the network 10. For example, the key distribution server 102 can generate an encryption key of the broadcast encryption system, and distribute the encryption key to the terminal device 122. Further, the key distribution server 102 may have a function serving as a content distribution server for providing content distribution service such as video distribution service, electronic music distribution service, and the like, or may have a function for distributing the content to the terminal device 122. The key distribution server 102 and the content distribution server may obviously be configured as different devices.

The content may be video content of moving image or still image such as movie, television program, video program, and figures, audio content of music, lecture, and radio program, game content, document content, or arbitrary content data including software and the like. The video content may include not only the video data but also the audio data.

(Terminal device 122)

The terminal device 122 can receive various information from the key distribution server 102. For instance, the terminal device 122 can receive the content or the content key distributed by the key distribution server 102. The terminal device 122 can decrypt the encrypted content using the content key received from the key distribution server 102. However, since the content or the content key transmitted from the key distribution server 102 is encrypted by a predetermined set key, the content or the content key is to be decrypted. The terminal device 122 thus decrypts the encrypted content or the content key using the predetermined set key acquired from the key distribution server 102. The terminal device 122 can also use the set key, which it holds in advance, or an intermediate key for generating the predetermined set key to generate the set key used by the key distribution server 102 to encrypt the content or the content key. In this case, the terminal device 122 inputs the set key or the intermediate key, which it holds, to the pseudo-random sequence generator and generates the desired set key based on the information related to the digraph acquired from the key distribution server 102. The intermediate key is an example of key information.

According to such configuration, the terminal device 122 does not generate the digraph necessary for generating the desired set key, and thus the amount of information to be held can be reduced and the calculation load in generating the set key can be reduced.

The terminal device 122 is a terminal device that can data communicate with an external device by way of the network 10, and is owned by each contractant. The terminal device 122 is configured by an information processing device such as a personal computer (not shown), but is not limited thereto, and may be configured by information home electrical appliance such as PDA (Personal Digital Assistant), household game machine, DVD/HDD recorder, and television receiver, television broadcast tuner and decoder, and the like as long as it is a device having a communication function enabling information communication through the network 10. The terminal device 122 may also be a portable device that can be carried around by the contractant such as portable game machine, portable telephone, portable video/audio player, PDA, and PHS.

The configuration of the key providing system 100 according to the present embodiment has been briefly described above. A specific example of a hardware configuration of the key distribution server 102 and the terminal device 122 configuring the key providing system 100 will now be briefly described.

[Hardware configuration of key distribution server 102 and terminal device 122]

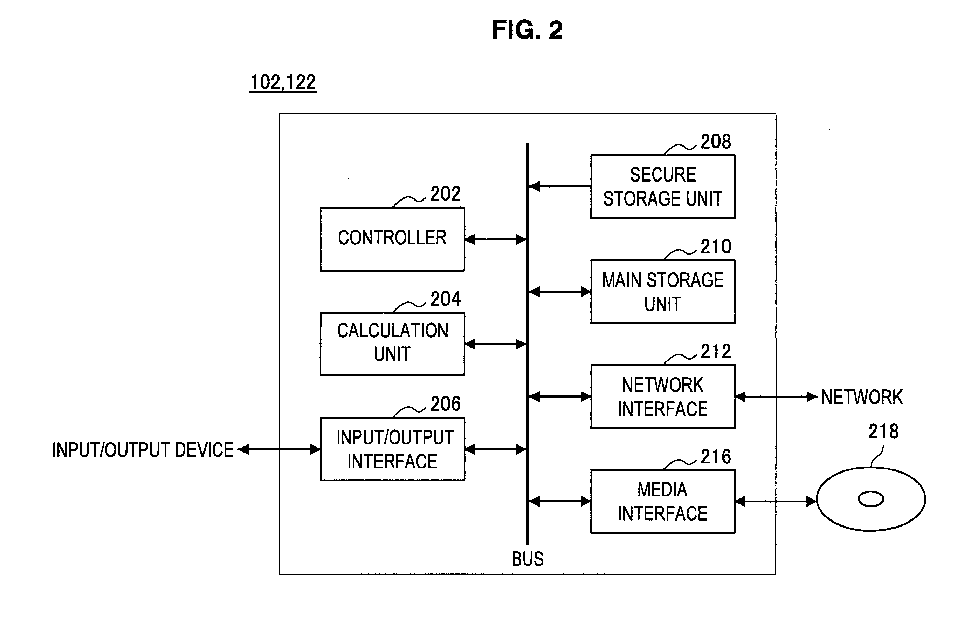

A hardware configuration of the key distribution server 102 and the terminal device 122 will be briefly described with reference to FIG. 2. FIG. 2 shows an example of the hardware configuration capable of realizing the functions of the key distribution server 102 or the terminal device 122 according to the present invention.

With reference to FIG. 2, the key distribution server 102 and the terminal device 122 are configured by a controller 202, a calculation unit 204, an input/output interface 206, a secure storage unit 208, a main storage unit 210, a network interface 212, and a media interface 216.

(Controller 202)

The controller 202 is connected to other configuring elements by way of a bus, and mainly controls each unit in the device based on the program and the data stored in the main storage unit 210. The controller 202 may be configured by calculation processing devices such as central processing unit (CPU).

(Calculation unit 204 (case of key distribution server 102))

The calculation unit 204 of the key distribution server 102 can execute encryption of content, encryption of content key, generation of digraph, generation of set key, and generation of intermediate key used to generate the set key. Therefore, the calculation unit 204 has the function as the pseudo-random sequence generator for generating the pseudo-random sequence based on predetermined data (seed value etc.) and at the same time, encrypts the content or the content key based on a predetermined algorithm. The predetermined algorithm may be stored in the main storage unit 210 as a program that is legible by the calculation unit 204. The predetermined data may be stored in the main storage unit 210 or the secure storage unit 208. The calculation unit 204 can record the output result obtained by executing various types of calculation processes in the main storage unit 210 or the secure storage unit 208. The calculation unit 204 is configured by a calculation processing device such as CPU. The calculation unit 204 may be integrally formed with the controller 202.

(Calculation unit 204 (case of terminal device 122))

The calculation unit 204 of the terminal device 122 can execute decryption of content, decryption of content key, generation of set key, and generation of intermediate key used to generate the set key. Therefore, the calculation unit 204 has the function as the pseudo-random sequence generator for generating the pseudo-random sequence based on predetermined data (seed value etc.) and at the same time, decrypts the content or the content key based on a predetermined algorithm. The predetermined algorithm may be also stored in the main storage unit 210 as a program that is legible by the calculation unit 204. The predetermined data may be stored in the main storage unit 210 or the secure storage unit 208. The calculation unit 204 can record the output result obtained by executing various types of calculation processes in the main storage unit 210 or the secure storage unit 208. The calculation unit 204 is configured by a calculation processing device such as CPU. The calculation unit 204 may be integrally formed with the controller 202.

(Input/output interface 206)

The input/output interface 206 is mainly connected to an input device for the user to input data, and an output device for outputting the content of the calculation result or the content. The input device may be keyboard, mouse, track ball, touch pen, keypad, touch panel, or the like. The input device may be wire or wirelessly connected to the input/output interface 206. The input device may be a wired or wirelessly connected portable electronic device such as portable telephone and PDA. The output device may be a display device such as display, an audio output device such as speaker, or the like. The output device may be wire or wirelessly connected to the input/output interface 206. The input/output device may be integrally formed with respect to the key distribution server 102 or the terminal device 122.
The input/output interface 206 is connected to other configuring elements by way of a bus, and can transmit data input through the input/output interface 206 to the main storage unit 210, and the like. To the contrary, the input/output interface 206 can output the data stored in the main storage unit 210 and the like, the data input through the network interface 212 and the like, the result obtained through calculation based on the relevant data by the calculation unit 204, or the like to the output device.

(Secure storage unit 208)

The secure storage unit 208 is a storage device for safely storing data requiring confidentiality such as mainly content key, set key, and intermediate key. The secure storage unit 208 may be configured including a magnetic storage device such as hard disc, an optical storage device such as optical disc, an magnetic-optical storage device, a semiconductor storage device, or the like. The secure storage unit 208 may be configured as a storage device having tamper resistance property.

(Main storage unit 210)

The main storage unit 210 may store an encryption program for encrypting the content or the content key, a decryption program for decrypting the encrypted content or the content key, a key generation program for generating the set key or the intermediate key, or the like. The main storage unit 210 may temporarily or permanently store the calculation result output from the calculation unit 204, or store the data input from the input/output interface 206, the network interface 212, or the media interface 216. The main storage unit 210 may be configured by a magnetic storage device such as hard disc, an optical storage device such as optical disc, a magnetic-optical storage device, a semiconductor storage device, or the like.

(Network interface 212)

The network interface 212 is an interface means connected to other communication devices by way of the network 10 for transmitting and receiving encrypted content or content key, set key, data such as intermediate key, parameter information used in encryption, and data related to the set of permitted contractant. The network interface 212 is connected to other configuring elements by way of the bus so as to transmit data received from the external device on the network 10 to other configuring elements or transmit data of other configuring elements to the external device on the network 10.

(Media interface 216)

The media interface 216 is an interface for removably attaching an information media 218 to read or write data, and is connected to other configuring elements by way of the bus. The media interface 216 can read out the data from the attached information media 218 and transmit the same to other configuring elements, or write the data provided from other configuring elements to the information media 218. The information media 218 may be a portable storage medium (removable storage medium) such as optical disc, magnetic disc, and semiconductor memory, or may be a storage medium of an information terminal wire or wirelessly connected at a relatively close distance without the network 10.

One example of the hardware configuration capable of realizing the functions of the key distribution server 102 and the terminal device 122 according to the present embodiment has been described above. Each configuring elements above may be configured using a universal member or may be configured by a dedicated hardware specialized for the function of each configuring elements. Therefore, the hardware configuration to use can be appropriately changed according to the technical level at the time of implementing the present embodiment. The hardware configuration described above is merely an example, and is not limited thereto. For instance, the controller 202 and the calculation unit 204 may be configured by the same calculation device, or the secure storage unit 208 and the main storage unit 210 may be configured by the same storage device. The media interface 216, the input/output interface 206, or the like may be omitted depending on the usage mode.

[Key distribution system to which the present embodiment can be applied]

The AI05 system and the A06(A+B) system will be described in detail as examples of the key distribution system to which the present embodiment can be applied. It should be recognized that the key distribution system to which the present embodiment can be applied is not limited thereto, and means for applying the present embodiment to other key distribution systems can be can be easily contrived by those skilled in the art from the following description.

(AI05 system)

The AI05 system to which the present embodiment can be applied will be described below. The AI05 system is a system for dividing the set of terminal devices 122, to which the content is distributed, to a plurality of subsets, and encrypting the content key with the set key corresponded to each subset and distributing the same. Each process described below is mainly executed by the key distribution server 102, but at least part of the algorithm below is used in the terminal device 122 to generate the key for decrypting the content or the content key.

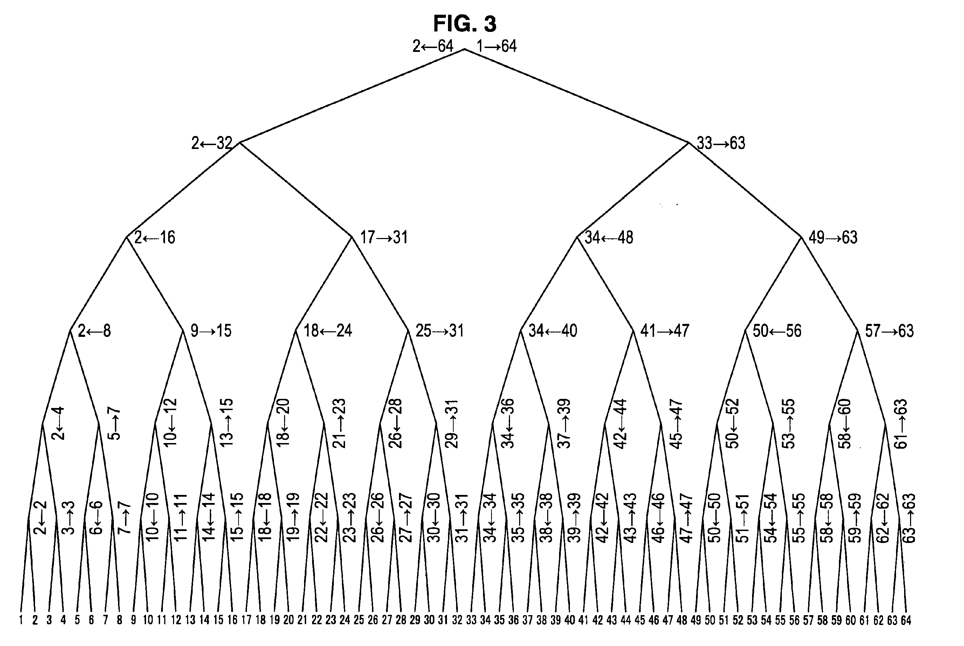

In the AI05 system, review is made with the set of terminal devices 122, to which the content is distributed, divided into a plurality of subsets. The way of dividing into subsets according to the AI05 system will be described with reference to FIG. 3. Although there are more than one way of dividing into subsets, the way of dividing into subsets using the binary tree structure is adopted in the AI05 system. In the AI05 system, a predetermined subset is corresponded to each nodal point (node) forming the binary tree structure in view of the positional relationship between the nodes, so that the subset of the terminal device 122 having a predetermined combination can be exhaustively selected. First, the method of building the binary tree structure will be described with reference to FIG. 3. The expressions used in the description are defined as below.

(Various definitions)

Set N of all terminal devices (contractant) = $\{1, \cdots, n\}$ (n is power of 2)
Regarding natural numbers i and j (where, $l \leq j$)

$$[i,j] = \{i, i+1, \ldots, j\}$$

$$(i \rightarrow i) = (i \leftarrow i) = \{\{i\}\}$$

$$(i \rightarrow j) = \{\{i\}, \{i, i+1\}, ..., \{i, i+1, ..., j\}\}$$
$$= \{[i,i], [i,i+1], ..., [i,j]\}$$

$$(i \leftarrow j) = \{\{j\}, \{j, j-1\}, ..., \{j, j-1, ..., i\}\}$$
$$= \{[j,j], [j,j-1], ..., [j,i]\}$$

The node positioned at the terminal end on the binary tree structure is called the leaf node, the node positioned at the vertex as the root node, and each node positioned between the root node and the leaf node as the intermediate node. Each leaf node is corresponded to each terminal device 122. In the example of FIG. 3, a case where the number of leaf nodes n of the BT is n = 64 is shown.

(Formation of binary tree structure)

First, the BT is formed such that the number of leaf nodes is n (e.g., n = 64). The numbers 1, ..., n are corresponded from the left end towards the right with respect to each leaf node. That is, the numbers 1, ..., n are corresponded to each terminal device 122. Indices $l_v$ and $r_v$ for defining the subset to assign to a certain intermediate node v is then defined. Among the leaf nodes positioned at the lower level of the certain intermediate node, the number of the leaf node at the most left is defmed as $l_v$ and the number of the leaf node at the most right is defined as $r_v$. Here, the intermediate node v indicates the intermediate node on the BT having v as the index.

Next, the intermediate nodes on the BT are classified into two sets. Among the intermediate nodes on the BT, the set of intermediate nodes positioned on the left side of a parent node is defined as $BT_L$ and the set of intermediate nodes positioned on the right side of the parent node is defined as $BT_R$. Regarding the positional relationship between two nodes connected on the BT, the node positioned at the higher level is called the parent node, and the node positioned at the lower level is called the child node.

(Correspondence of set with respect to root node)

The set to correspond to the root node of the BT is then set. Since all leaf nodes are coupled to the root node at the lower level, a set having a subset including part of or all of the terminal devices 122 as an element is corresponded. That is, set $(1 \rightarrow n)$ and set $(2 \leftarrow n)$ are set as sets to be corresponded to the root node. For instance, in set $(1 \rightarrow 64)$ and set $(2 \leftarrow 64)$ are corresponded to the root node of FIG. 3.

This correspondence is due to the following reasons. According to the above definition, the set $(1 \rightarrow 64)$ includes the subsets [1,1], ···, [1,64] as elements, and thus a group of terminal devices 122 including all terminal devices 122 (numbers 1 to 64) can be represented as [1,64] = {1, ..., 64}. Similarly, all the terminal devices 122 excluding the terminal device 122 number 16 can be represented by using the subset [1,15] and the subset [64,17]. In this case, the subset [1,15] includes the set $(1 \rightarrow 64)$, and the subset [64,17] includes the set $(2 \leftarrow 64)$. That is, an arbitrary combination of the leaf node (i.e., terminal device 122) positioned at the lower level of the root node can be represented using the subset of the set corresponded to the root node.

(Correspondence of set with respect to intermediate node)

The subset is then corresponded to each intermediate node of the BT. First, the set $(l_v + l \leftarrow r_v)$ is corresponded to the intermediate node v belonging to the set $BT_L$ for all v. Similarly, the set $(l_v \rightarrow r_v - l)$ is corresponded to the intermediate node v belonging to the set $BT_R$ for all v. In FIG. 3, the set corresponded to each intermediate node is described.

For instance, with reference to the intermediate node corresponded with the set $(2 \leftarrow 4)$, the set $(2 \leftarrow 2)$ and the set $(3 \rightarrow 3)$ are corresponded to the two intermediate nodes positioned at the lower level of such intermediate node. The leaf nodes 1, ..., 4 are coupled at the lower level of the two intermediate nodes. When representing the combination of the leaf nodes excluding number 3, a set of subsets of {[1,1],[2,2],[4,4]} or {[1,2],[4,4]} is corresponded. The subsets [1,1] and [1,2] are elements of the set $(1 \rightarrow 64)$ assigned to the root node, and the subsets [2,2] and [4,4] are elements of the sets $(2 \leftarrow 2)$ and $(2 \leftarrow 4)$, respectively. That is, the desired combination of the leaf node (terminal device 122) can be represented by using the subset of the set corresponded to each intermediate node.

In the AI05 system, the set of subsets representing the combination of the terminal devices 122 is defined using the BT. The whole set formed by the above subsets is referred to as a set system SS. The set system SS can be mathematically expressed as in the following Equation (1).

## [Equation 1]

$$SS = \left\{ \bigcup_{v \in BT_L} (l_v + 1 \leftarrow r_v) \right\} \cup \left\{ \bigcup_{v \in BT_R} (l_v \rightarrow r_v - 1) \right\} \cup (1 \rightarrow n) \cup (2 \leftarrow n)$$

$$\cdots (1)$$

The method of forming the binary tree structure in the AI05 system has been described above. The fundamental concept of the AI05 system is to generate a plurality of set keys for encrypting the content or the content key with respect to each subset, encrypting the content or the content key with each set key, and distributing the same to a predetermined terminal device 122. Although not clearly implied from the description made above, means for efficiently classifying the combination of the terminal devices 122 can be provided by defining the subset according to the above rule. An algorithm for generating the set key using the subset will be described below.

(Generation of digraph)

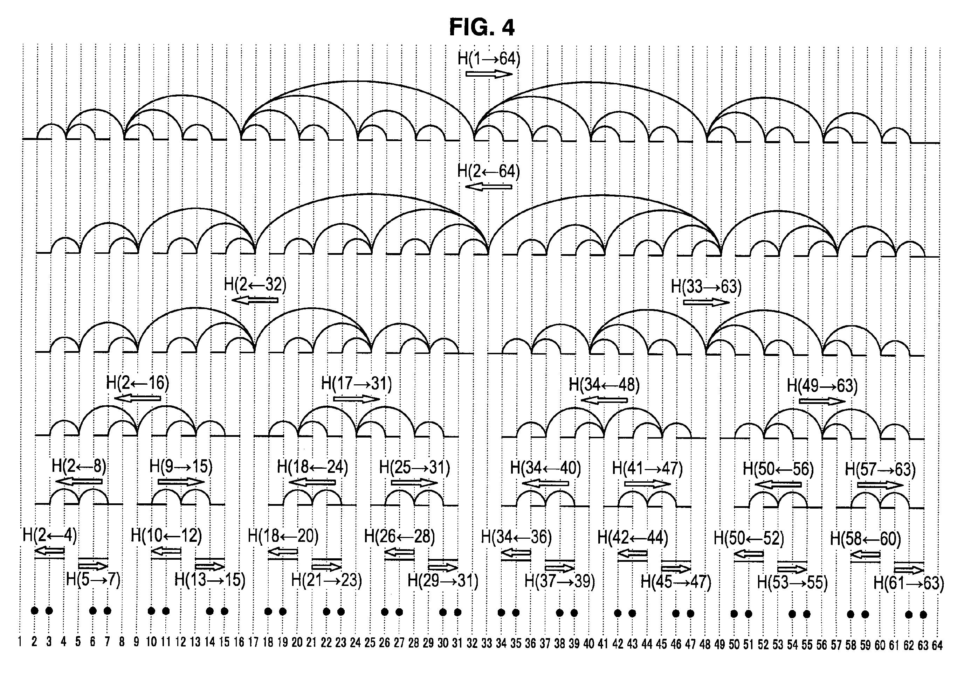

The algorithm for generating the set key will be described with reference to FIG. 4. The algorithm is expressed by a digraph formed by a plurality of directional branches. The method of generating the digraph will be described in detail. First, the set key for encrypting the content key, and the intermediate key for generating the set key will be described.
In the AI05 system, the pseudo-random sequence generator PRSG is used to generate the set key. When the intermediate key $t(S_0)$ corresponding to a certain subset So is input, the PRSG outputs the set key $k(S_0)$ corresponding to the subset So and the intermediate keys $t(S_1)$, $t(S_2)$, ..., $t(S_k)$ corresponding to the subsets $S_1$, $S_2$,..., $S_k$. The relationship between the subset $S_0$ and other subsets $S_1$, ..., $S_k$ is defined by the digraph, to be hereinafter described.
The sets $S_0$, $S_1$, ..., $S_k$ are one of the subsets configuring the set system SS, and represent the combination of the terminal devices 122, as described above. The feature of the AI05 system is in the shape of the digraph in which a logic defining the relationship between the input (e.g., $t(S_0)$) and the output (e.g., $k(S_0)$, $t(S_1)$,...,$t(S_k)$) of the PRSG is expressed. The method of generating the digraph according to the AI05 system will be described. First, symbols and the like used will be defined below.

(Various definitions)

Intermediate key corresponding to subset $S_i$: $t(S_i)$
set key corresponding to subset $S_i$: $k(S_i)$
content key: mek
pseudo-random sequence generator: PRSG
directional branch: E
directional path (path): P
digraph: H
number of directional branches having coordinate point corresponding to subset $S_i$ as starting point: d

The digraph of the AI05 system corresponding to the set ($i \rightarrow j$) or the set ($i \leftarrow j$) is noted as $H(i \rightarrow j)$ or $H(i \leftarrow j)$. The directional path P is an example of the key generation path information. The input and output of the PRSG are noted as in the following Equation (2). This indicates that the set key $k(S_0)$ and the plurality of intermediate keys $t(S_1)$, ..., $t(S_d)$ are output as a result of the input of the intermediate key $t(S_0)$ to the PRSG.
[Equation 2]

$$t(S_1) || \cdots || t(S_d) || k(S_0) \leftarrow PRSG(t(S_0)) \quad \cdots (2)$$

(Algorithm)

First, a parameter k (k is a natural number) is determined. However, k|log(n) (hereinafter, the base of log is 2) for the sake of simplification. The parameter k is related to the number of intermediate keys to be consequently held by the terminal device 122 and the amount of calculation necessary for the terminal device 122 to generate the set key. Therefore, the parameter k is a parameter to be appropriately set according to the embodiment. In the example of FIG. 4, k = 6 is set.

The method of generating the digraph will be specifically described with regards to the digraph $H(l_v \rightarrow r_v\text{-}1)$ corresponding to a certain intermediate node v with reference to FIG. 4.

(Step 1)

The horizontal coordinate axis for configuring the digraph $H(l_v \rightarrow r_v\text{-}1)$ is first set. Each coordinate point of the horizontal coordinate axis is corresponded with each subset $S_i$ configuring the set $(l_v \rightarrow r_v\text{-}1)$. The subset Si corresponded to each coordinate point is arranged such that the inclusion relation becomes larger from the left towards the right. For instance, using the digraph $H(5 \rightarrow 7) = H(\{[5,5], [5,6], [5,7]\})$ by way of example, the subsets [5,5], [5,6], [5,7] are corresponded in order from the left to the coordinate points of the horizontal coordinate axis.

With reference to FIG. 4, a plurality of vertical lines z(z = 1 to 64) orthogonal to the horizontal coordinate axis on which each digraph H is formed are drawn. The intersection of the vertical line z and the digraph H represents the coordinate value. For instance, the intersection of the digraph $H(l_v+1 \leftarrow r_v)$ and the vertical line z represents the coordinate point corresponded to the subset $[r_v,z]$, and the intersection of the digraph $H(l_v \rightarrow r_v\text{-}1)$ and the vertical line z represents the coordinate point corresponded to the subset $[l_v,z]$. The coordinate point corresponded to the subset Si is hereinafter sometimes noted as coordinate point $S_i$.

After the horizontal coordinate axis is set according to the above rule, one temporary coordinate point is set on the left side of the coordinate point positioned at the most left on the horizontal coordinate axis. Furthermore, one temporary coordinate point is set on the right side of the coordinate point positioned at the most right on the horizontal coordinate axis. The temporary coordinate point at the left end is assumed as the starting point and the temporary coordinate point at the right end is assumed as the ending point. The length $L_v$ from the temporary coordinate point positioned at the left end to the temporary coordinate point positioned at the right end is $L_v = r_v\text{-}l_v+1$.

(Step 2)

The directional branch forming the digraph $H(l_v \rightarrow r_v\text{-}1)$ is set.

(2-1) An integer x satisfying $n^{(x-1)/k} < L_v \leq n^{x/k}$ is calculated. Here, the integer x is $1 \leq x \leq k$.
(2-2) The following operation is repeatedly executed while moving the counter i from 0 to x-1. Starting from the starting point on the horizontal coordinate axis, the rightward directional branch extending to the coordinate point distant by $n^{i/k}$ from the relevant coordinate point (i.e., jump to the coordinate point distant by $n^{i/k}$ from the relevant coordinate point) is repeatedly generated until the terminating end of the directional branch reaches the ending point on the horizontal coordinate axis or until the ending point of the directional branch formed next exceeds the ending point on the horizontal coordinate axis.

(Step 3)

All directional branches having the temporary coordinate point as the starting point or the ending point are deleted.

(Step 4)

If the directional branch reaching a certain coordinate point is in plurals, all directional branches excluding only the longest directional branch are deleted.

The digraph $H(l_v \rightarrow r_v\text{-}1)$ can be built by executing the above-described algorithm (step 1 to step 4).

The configuration of the digraph will be specifically described using the digraph $H(33 \rightarrow 63)$ of FIG. 4 by way of example. The digraph $H(33 \rightarrow 63)$ is configured by a plurality of arch-shaped curves, and a line being connected to one end of each arch-shaped curve and extending horizontally. The arch-shaped curve and the horizontally extending line are directional branches. The intersection of the end of each directional branch and the vertical line is the coordinate point of the horizontal coordinate axis. The path between the coordinate points formed by a plurality of coupled directional branches is referred to as the directional path.

The outlined arrow displayed on the upper side of the digraph $H(33 \rightarrow 63)$ indicates the direction of the directional branch. The digraph $H(33 \rightarrow 63)$ is s obtained as a result of executing the above-described algorithm for the case of $l_v = 33$, $r_v = 64$, $k = 6$, $n = 64$. The black circle drawn at the lowermost stage in FIG. 4 represents the digraph $H(2 \leftarrow 2)$, ···, H $(63 \rightarrow 63)$ in order from the left.

The above-described algorithm is provided to generate the rightward digraph $H(l_v \rightarrow r_v\text{-}1)$, but the leftward digraph $H(l_v+1 \leftarrow r_v)$ can be similarly generated by applying the algorithm. However, when setting the horizontal coordinate axis forming the digraphs $H(l_v+1 \leftarrow r_v)$ and $H(2 \leftarrow n)$, it is to be noted that the subset $S_i$ is arrayed such that the inclusion relation becomes larger from the right towards the left on the horizontal coordinate axis and that the direction of the directional branch is leftward.

The method of generating the digraph H according to the AI05 system has been described above. The logic for generating the set key using the digraph H will be described below.

(Generation of set key)

In the AI05 system, the content key mek is encrypted using each set key $k(S_i)$ corresponding to each subset $S_i$ configuring the set system SS. Each coordinate point of the digraph H corresponds to the subset $S_i$ representing the combination of the terminal devices 122, as described above. The set key $k(S_i)$ and the intermediate key $t(S_i)$ are corresponded to each subset $S_i$. The method of generating the set key $k(S_i)$ based on the digraph H will be described in view of such correspondence relationship.

The coordinate point indicated by the terminating end of one or more directional branches having the coordinate point So as the starting end is expressed as $S_1$, $S_2$, ..., $S_k$ in the order closer to the starting end So of the relevant directional branch (order of shorter directional branch). If the number of directional branches having the coordinate point So as the starting point is q (q < k), the coordinate points $S_{(q+1)}$, $S_{(q+2)}$, ..., $S_k$ are counted as dummies but are not actually used. Since the number of repetition processes in (step 2-2) is x ($1 \leq x \leq k$), the number of directional branches having each coordinate point of the digraph H as the starting end is k at maximum.

According to the AI05 system, the set key $k(S_i)$ is generated using the PRSG that outputs $(k+1)^*\lambda$ bits with respect to the input of $\lambda$ bits. When the intermediate key $t(S_0)$ corresponding to the coordinate point So is input, the PRSG outputs the intermediate key $t(S_1)$, $t(S_2)$, ..., $t(S_k)$ corresponding to each coordinate point (e.g., coordinate points $S_1$, $S_2$, ..., $S_k$) to which the directional branch having the coordinate point So as the starting end reaches, and the set key $k(S_0)$ corresponding to the input intermediate key $t(S_0)$. That is, $t(S_1)\|...\|t(S_k)\|k(S_0) \leftarrow \text{PRSG}(t(S_0))$. The intermediate keys $t(S_1)$, $t(S_2)$, ..., $t(S_k)$ and the set key $k(S_0)$ can be generated by sectionalizing the output of the PRSG by $\lambda$ bits from the left.

For instance, with reference to FIG. 4, four directional branches are output from the coordinate point So focusing on the coordinate point So = [1, 8] (eighth coordinate point from the left end) of the digraph $H(1 \rightarrow 64)$. The ending points of the directional branches are coordinate points $S_1 = [1,9]$, $S_2 = [1,10]$, $S_3 = [1,12]$, and $S_4 = [1,16]$. Therefore, when the intermediate key $t(S_0)$ is input to the PRSG, the set key $k(S_0)$ and the intermediate keys $t(S_1)$, $t(S_2)$, $t(S_3)$, $t(S_4)$ can be generated. Furthermore, when the intermediate key $t(S_4)$ is input to the PRSG, the set key $k(S_4)$ and the intermediate keys $t(S_{11})$, $t(S_{12})$, $t(S_{13})$, $t(S_{14})$, $t(S_{15})$ corresponding to $S_{11} = [1,17]$, $S_{12} = [1,18]$, $S_{13} = [1,20]$, $S_{14} = [1,24]$, $S_{15} = [1,32]$ can be generated. The plurality of set keys thus can be calculated by repeatedly using the PRSG.

As described above, the intermediate key and the set key can be generated based on the digraph H if the predetermined intermediate key $t(S_0)$ is held. However, if the information of the digraph H is not referenced, the intermediate key or the set key generated by inputting the predetermined intermediate key $t(S_0)$ to the PRSG are not known, and thus the desired set key becomes difficult to generated. It is an object of the present embodiment to provide a solution to such issue. This will be hereinafter described.

The key generation method using the intermediate key has been described up to now, but the configuration of using the intermediate key is not essential in the existing AI05 system and in the present embodiment to be hereinafter described. The intermediate key is used for the purpose of enhancing safety, and another set key $k(S_1)$ etc. may be directly calculated from the set key $k(S_0)$ when significant attention is not paid to safety, when attempting to reduce the amount of calculation for generating the set key, or the like. For instance, when the set key $k(S_0)$ is input to the PRSG, the set keys $k(S_1)$, $k(S_2)$, $k(S_3)$, $k(S_4)$ corresponding to the reaching destinations of the directional branches extending from the coordinate point So may be output.

The method of generating the set key has been described above. As can be easily understood from the above example, if a certain intermediate key is being held, such intermediate key may be used and the PRSG may be iteratively executed to derive the intermediate key and the set key corresponding to all coordinate points that can be reached by a chain of directional branches extending from the coordinate point corresponding to the relevant intermediate key. Therefore, each terminal device 122 merely holds the minimum intermediate key that can derive all intermediate keys corresponding to the subset to which it is included as an element.

The key distribution server 102 uses the intermediate key corresponding to the head coordinate point (hereinafter referred to as route) of each digraph H, and repeatedly executes the calculation by the PRSG to derive the set key corresponding to all coordinate points to which the directional branches configuring each digraph can reach.

Therefore, the manager of the key providing system 100, for example, generates a random sequence of $\lambda$ bits and sets as an intermediate key of the route of each digraph H in the key distribution server 102 in time of setup of the key providing system 100. The route of the digraph H refers to the coordinate point where the directional branch extends from the relevant coordinate point but the directional branch does not reach the relevant coordinate point. For instance, the route of the digraph H(1→64) of FIG. 4 is the coordinate point [1,1] positioned at the left end of the horizontal coordinate axis.

The method of generating the set key has been described above. This method is used not only when generating the set key for the key distribution server 102, which is the transmitter side of the content or the content key, to encrypt the content or the content key and the intermediate key to distribute to each terminal device 122, but also to generate the desired set key using the intermediate key it holds in advance even in the terminal device 122 on the reception side.

(Method of distributing intermediate key)

A method in which the key distribution server 102 distributes a predetermined intermediate key to each terminal device 122 will now be described. A plurality of intermediate keys from which the set key corresponding to all subsets to which the relevant terminal device 122 is included can be derived is provided in advance to each terminal device 122. To the contrary, the intermediate key from which the set key corresponding to the subset to which the relevant terminal device 122 is not included can be derived is not provided to the terminal device 122, and the number of intermediate keys to be provided to the terminal device 122 is preferably a minimum.

The key distribution server 102 extracts all digraphs H that can reach the coordinate point corresponding to the subset in which the terminal device 122 of contractant u is included. If the terminal device 122 of the contractant u is included in the subset corresponding to the route of the digraph H, only the intermediate key corresponding to the relevant route is provided to the terminal device 122 of the contractant u.

If the terminal device 122 of the contractant u is included in one of the subsets corresponding to the coordinate points other than the route of the digraph H, the subset So where the terminal device 122 of the contractant u is included in the subset So and not included in the subset parent $(S_0)$ or the parent of the subset So is extracted. The intermediate key $t(S_0)$ corresponding to the subset So is provided to the terminal device 122 of the contractant u.

That is, if the terminal device 122 of the contractant u is included in the subset corresponding to a plurality of coordinate points other than of the route of the digraph H, the starting end of the directional branch reaching each coordinate point is referenced, and a coordinate point is selected such that the subset corresponding to the starting end of each coordinate point does not include the terminal device 122 corresponding to the contractant u. With the subset corresponding to such coordinate point as $S_0$, and the subset corresponding to the starting end (parent) of the directional branch reaching the coordinate point So as parent $(S_0)$, the intermediate key $t(S_0)$ corresponding to the coordinate point $S_0$ not including the subset parent $(S_0)$ is provided to the terminal device 122 of the contractant u.

If the coordinate point So exists in plurals, the respective intermediate key $t(S_0)$ is provided to the terminal device 122 of the contractant u. The parent-child relationship of the coordinate point is defined by the directional branch. That is, the starting end of the directional branch becomes the parent of the terminating end, and the terminating end of the directional branch becomes the child of the starting end. The parent of the coordinate point So is noted as parent $(S_0)$. It can be recognized that the parent of the coordinate point So does not exist if the coordinate point So is the route of the digraph H. Only one parent of the coordinate point So exists if the coordinate point So is not the route of the digraph H.

The method of distributing the intermediate key will now be specifically described with reference to the example of FIG. 4.

(Example 1)

The intermediate key distributed to the terminal device 122 of the contractant 1 will be considered. First, the digraph H that can reach the subset to which the terminal device 122 of the contractant 1 is included is extracted. With reference to FIG. 4, such digraph H is only digraph H(1→64). The terminal device 122 of the contractant 1 belongs to the subset [1,1] corresponding to the route of the digraph H(1→64). Therefore, the intermediate key t([1,1]) is distributed to the terminal device 122 of the contractant 1.

(Example 2)

The intermediate key distributed to the terminal device 122 of a contractant 3 will be considered. First, the digraph H that can reach the subset to which the terminal device 122 of the contractant 3 is included is extracted. With reference to FIG. 4, such digraph H is digraph H(1→64), H(2←64), H(2←32), H(2←16), H(2←8), H(2←4), H(3→3). Considering digraph H(1→64) first, it can be seen that the terminal device 122 of the contractant 3 is not included in the subset [1,1] corresponding to the route of the digraph H(1→64).

However, the terminal device 122 of the contractant 3 is included in the subsets [1,3], [1,4], ..., [1,64] after the third coordinate point. It can be seen with reference to the subset of the parent of such coordinate points that the coordinate points that do not include the terminal device 122 of the contractant 3 in the subset of the parent are only [1,3] and [1,4]. Therefore, the coordinate point [1,2] corresponding to the parents parent ([1,3]) and the parent ([1,4]) of the coordinate points [1,3], [1,4] does not include the terminal device 122 of the contractant 3.

As a result, the intermediate keys t([1,3]) and t([1,4]) corresponding to the digraph H(1→64) are distributed to the terminal device 122 of the contractant 3. Similarly, the intermediate key is selected for other digraphs H(2←64), H(2←32), H(2←16), H(2←8), H(2←4), H(3→3) and distributed to the terminal device 122 of the contractant 3. Consequently, a total of eight intermediate keys are distributed to the terminal device 122 of the contractant 3.

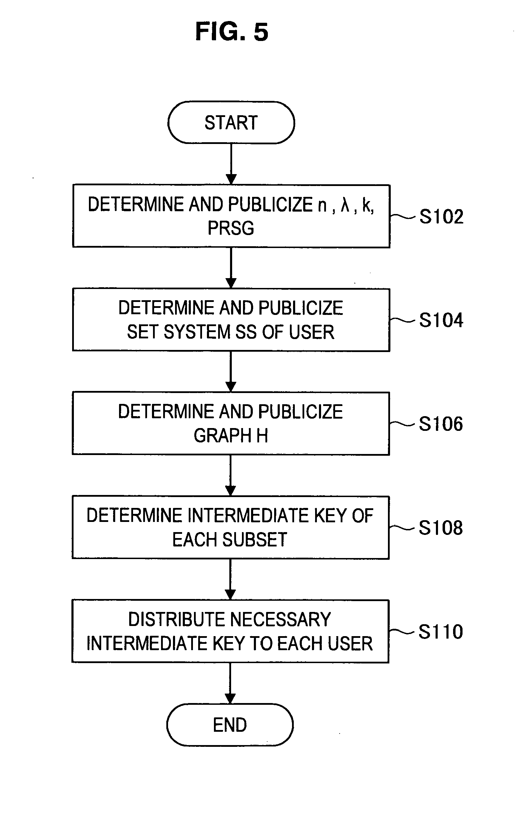

The process in which the key distribution server 102 distributes the intermediate key to each terminal device 122 will be briefly described with reference to FIG. 5. FIG. 5 is a flowchart showing a process in which the key distribution server 102 distributes the intermediate key to each terminal device 122 in time of system setup.

As shown in FIG. 5, the key distribution server 102 determines the number of contractant n, number of bits λ of the set key and the intermediate key, a predetermined parameter k, and the pseudo-random sequence generation algorithm by PRSG, and the like, and publicizes the same to all the terminal devices 122 (S102). The key distribution server 102 then divides the set of terminal devices 122 to a predetermined subset, and then determines the set system SS (see Equation (1)) expressed by the sum of sets, and publicizes the same to all the terminal devices 122 (S104). The key distribution server 102 determines the digraph H formed by a plurality of directional branches T, and publicizes partial or entire information to all the terminal devices 122 (S106). The intermediate key corresponding to each subset configuring the set system SS is then determined (S108). The intermediate key for each terminal device 122 to derive the desired set key based on the digraph is distributed to each terminal device 122(S110).

The method of distributing the intermediate key has been described above. Through the use of such distribution method, the intermediate key for the terminal device 122 of each permitted contractant to generate the set key can be efficiently distributed, and the amount of communication between the key distribution server 102 and the terminal device 122 and the amount of memory for each terminal device 122 to hold the key can be saved.

(Method of distributing content key)

A method of distributing the content key mek encrypted by the key distribution server 102 will now be described.

The key distribution server 102 first encrypts the content key mek using the set key that can be generated only by the terminal device 122 of the permitted contractant. The key distribution server 102 determines the set R including the terminal device 122 of the contractant to be eliminated (hereinafter referred to as eliminating contractant), and determines the set N/R obtained by excluding the set R from the set N including the terminal devices 122 of all contractant 1 to n.

One or a plurality of subsets $S_i(i = 1, 2, ..., m)$ is selected from the subset configuring the set system SS, and the set $N/R = S_1 \cup S_2 \cup ... \cup S_m$ is expressed using the selected subset. In this case, the combination of the subset $S_i$ exists in great numbers, but the subset $S_i$ in which the m becomes a minimum is desirably selected.

The key distribution server 102 encrypts the content key mek using the set key $k(S_i)$ corresponding to each subset $S_i$ after selecting the subset $S_i$, and generates m content keys mek encrypted by the set keys $k(S_1)$, $k(S_2)$, .... $k(S_m)$. The key distribution server 102 distributes the m encrypted content keys mek to the terminal devices 122 of all contractant 1 to n. In this case, the key distribution server 102 also distributes one or both of the information of the set N/R and the information of m subsets $S_i$ simultaneously to each terminal device 122.

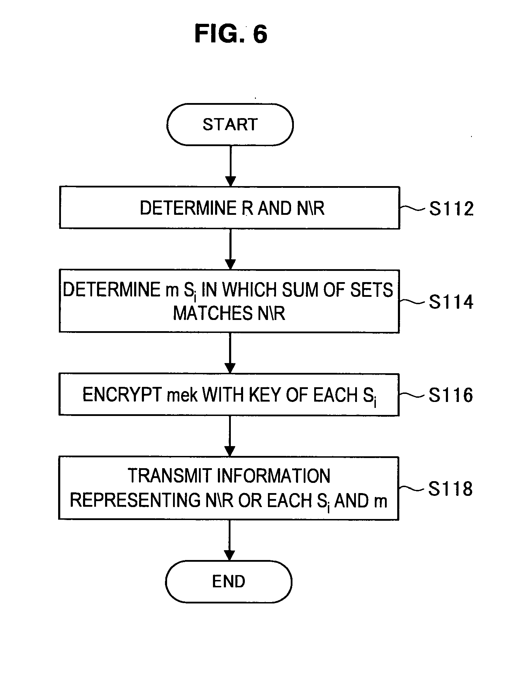

The distribution process of the content key mek encrypted by the key distribution server 102 will be briefly described with reference to FIG. 6. FIG. 6 is an explanatory view showing a flow of the distribution process of the content key.

With reference to FIG. 6, the key distribution server 102 determines the set R of eliminating contractant, and determines the set N/R of permitted contractant (S112). Thereafter, the key distribution server 102 selects m subsets $S_i(i = 1, 2, ..., m)$ in which the sum of sets becomes N/R from the subsets configuring the set system S S (S114). The key distribution server 102 encrypts the content key mek using the set key $k(S_i)$ corresponding to each selected subset

$S_i$ (S116). The key distribution server 102 then distributes information representing the set N/R or each subset $S_i$, and the m encrypted content keys mek to all the terminal devices 122 (S118).

The encryption method and the distribution method of the content key mek by the key distribution server 102 have been described above. The subset $S_i$ can be selected such that the number of set keys necessary for encryption becomes a minimum by using the encryption method described above. Thus, the amount of calculation for the encryption can be reduced when encrypting the content key mek, the number of encrypted content keys mek to be distributed can be reduced, and the amount of communication can be reduced.

(Decryption method of content key)

A decryption process of the content or the content key in each terminal device 122 will now be described. The terminal device 122 decrypts the content key mek based on the information of the set N/R or m subsets $S_i$ received from the key distribution server and the m encrypted content keys.

The terminal device 122 receives the encrypted content key mek and the information representing the set N/R or the information representing m subsets $S_i$ from the key distribution server 102. The terminal device 122 then analyzes the information, and judges whether or not it is included in one of the m subsets $S_i$. When judging that it is not included in any subset, the terminal device 122 judges that it is the terminal device 122 of the eliminating contractant, and terminates the decryption process. When the subset $S_i$ in which it is included is found, the terminal device 122 derives the set key $k(S_i)$ corresponding to the relevant subset $S_i$ using the PRSG. The configuration of the PRSG used by the terminal device 122 is similar to the configuration of the PRSG used by the key distribution server 102 in encryption.

Assume that the terminal device 122 is distributed in advance with the intermediate key $t(S_i)$ corresponding to the subset $S_i$ or the intermediate key $t(S_j)$ from which the intermediate key $t(S_i)$ can be derived from the key distribution server 102 in time of system setup. The terminal device 122 inputs the intermediate key $t(S_i)$ or $t(S_j)$, which it holds, to the PRSG so as to derive the set key $k(S_i)$ corresponding to the subset $S_i$. In this case, the terminal device 122 repeatedly executes the process of the PRSG with reference to the information of the digraph, and calculates the set key $k(S_i)$. The terminal device 122 then decrypts the encrypted content key mek using the derived set key $k(S_i)$.

Reference is again made to FIG. 4. A specific example of the method of deriving the set key $k(S_i)$ in the terminal device 122 will be described with reference to FIG. 4.

(Example 1)

A process in which the terminal device 122 of the contractant 3 derives the set key corresponding to the subset [1, 8] based on the digraph H shown in FIG. 4 will be reviewed. The key distribution server 102 distributes the intermediate key of the subset [1,4] in advance to the terminal device 122 of the contractant 3 in time of the system setup.

First, with reference to the digraph $H(1 \rightarrow 64)$, a directional branch extending from the coordinate point [1,4] to the coordinate point [1,8] exists. The directional branch is the directional branch which distance is the third shortest of the directional branches having the coordinate point [1,4] as the starting end. The terminal device 122 of the contractant 3 then extracts the portion of $\lambda$ bits third from the head of the output obtained by inputting the intermediate key $t([1,4])$ corresponding to the coordinate point [1,4] to the PRSG. The portion of $\lambda$ bits third of the output is the intermediate key $t([1,8])$ corresponding to the subset [1,8]. After extracting the intermediate key $t([1,8])$ from the output of the PRSG, the terminal device 122 of the contractant 3 extracts the final $\lambda$ bit of the output obtained by again inputting the intermediate key $t(S[1,8])$ to the PRSG. The final $\lambda$ bit of the output is the desired set key $k([1,8])$. The terminal device 122 of the contractant 3 can generate the desired set key $k([1,8])$ through the above processes.

(Example 2)

Similarly, a case where the terminal device 122 of the contractant 1 generates the set key $k([1,8])$ based on the digraph H of FIG. 4 will be considered. The terminal device 122 of the contractant 1 holds the intermediate key $t([1,1])$ corresponding to the subset [1,1] in advance. The terminal device 122 of the contractant 1 extracts the portion (intermediate key $t([1,2])$) of $\lambda$ bits first from the head of the output obtained by inputting the intermediate key $t([1,1])$ to the PRSG. The terminal device 122 of the contractant 1 then extracts the portion (intermediate key $t([1,4])$) of $\lambda$ bits second from the head of the output obtained by again inputting the intermediate key $t([1,2])$ to the PRSG. Furthermore, the terminal device 122 of the contractant 1 extracts the portion (intermediate key $t([1,8])$) of $\lambda$ bits third from the head of the output obtained by again inputting the intermediate key $t([1,4])$ to the PRSG. Lastly, the terminal device 122 of the contractant 1 extracts the final $\lambda$ bit (set key $k([1,8])$) of the output obtained by inputting the intermediate key $t([1,8])$ to the PRSG, and acquires the desired set key $k([1,8])$.

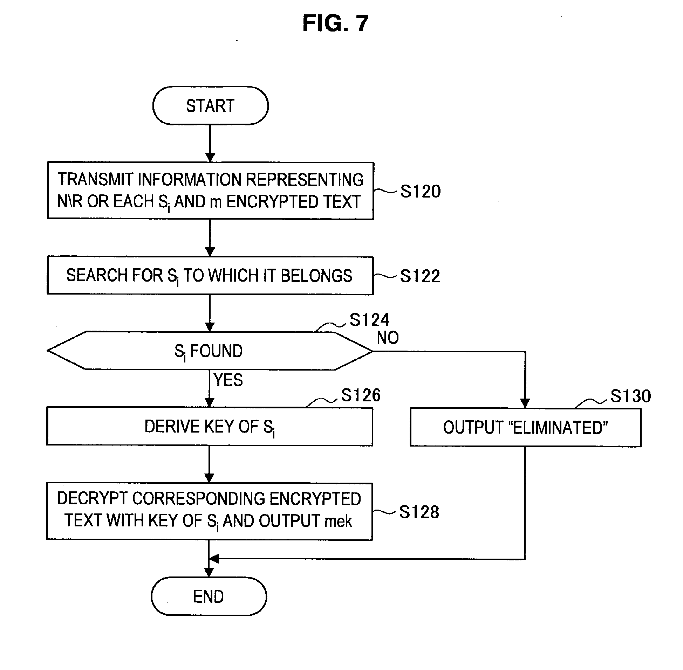

A decryption process of the encrypted content key mek in each terminal device 122 will now be described with reference to FIG. 7. FIG. 7 is an explanatory view showing a flow of the decryption process of the content key in the terminal device 122.

With reference to FIG. 7, the terminal device 122 receives the m encrypted content keys mek and the information representing the set N/R or the information representing m subsets $S_i$(i = 1, 2, ..., m) from the key distribution server 102 (S120). The terminal device 122 then searches for the subset $S_i$ to which it is included (S122), and determines whether or not included in one of the m subsets $S_i$ (S124).

If a subset $S_i$ to which it is included exists, the terminal device 122 uses the PRSG to derive the set key $k(S_i)$ corresponding to such subset $S_i$ (S126). The terminal device 122 then decrypts the encrypted content key mek using the derived set key $k(S_i)$ (S128).

If not included in any of the subsets $S_i$, the terminal device 122 displays and outputs a notification of not being the terminal device 122 of the permitted contractant (notification of being eliminating contractor) (S130), and terminates the decryption process of the content key.

The decryption method of the content key in the terminal device 122 has been described above. The decryption method requires the information of the digraph and the PRSG on the terminal device 122 side. However, it is difficult for the terminal device 122 to hold all the information of the digraph as this oppresses the memory amount of the terminal device 122, and it is also difficult for the terminal device 122 to generate all digraphs as this increases the calculation load of the terminal device 122. It is also difficult to distribute all information of the digraph as this significantly increases the amount of calculation or oppresses the storage capacity of the distribution media. The key providing system 100 according to the present embodiment provides means for solving such issues, and the features will be hereinafter described.

(Summary of AI05 system)

The AI05 system to which the present embodiment can be applied has been described above. Through the use of the AI05 system, the number of intermediate keys to be held by each terminal device 122 can be suppressed to $O(k*\log(n))$. The amount of calculation (number of operations of PRSG) necessary for the generation of the set key can be suppressed to lower than or equal to about $(2k-1)*(n^{1/k}-1)$. However, as already pointed by the applicant of the subject application, the AI05 system still needs some improvement from the standpoint of efficiency. For instance, the A06(A) system succeeded in reducing the number of keys to be held by the terminal device 122, and the A06(B) system succeeded in reducing the amount of calculation necessary for the terminal device 122 to generate the key. The A06 (A+B) system succeeded in reducing the number of keys to be held by the terminal device 122 and the amount of calculation necessary for generating the key in a satisfactorily balanced manner. The feature of the present embodiment lies in how to provide the information of the digraph necessary when the terminal device 122 generates the key, and thus can be applied to at least all of the systems described above.

(A06(A+B) system)

The A06(A+B) system to which the present embodiment can be applied will now be described. As described above, the A06(A+B) system is a system capable of realizing efficient key distribution compared to the AI05 system. Therefore, it is more efficient to apply the A06(A+B) system when applying the present embodiment.

Prior to describing the A06(A+B) system, the efficiency of key distribution will be briefly described. First, the amount of calculation for the terminal device 122 to generate the desired key depends on the number of times the PRSG is executed to derive the desired intermediate key. The worst value corresponds to the number of directional branches that exist until reaching the coordinate point at the end most distant from the route (leaf from which the directional branch does not extend). With reference to the digraph H(1→64), eleven directional branches are passed from the route [1,1] until reaching the coordinate point [1,64] at the end, which means that the PRSG is executed eleven times for the terminal device 122 holding the intermediate key t([1,1]) to derive the intermediate key t([1,64]). Therefore, the amount of calculation of the terminal device 122 can be reduced by reducing the number of directional branches configuring the longest path of the digraph while ensuring the path that can reach all the coordinate points on the horizontal coordinate axis. One approach on the issue is the A06(B) system, and A06(A+B) system is the more improved system. A case of applying the present embodiment to the A06(A+B) system will be described in detail by way of example.

[Configuration of key distribution server 102]

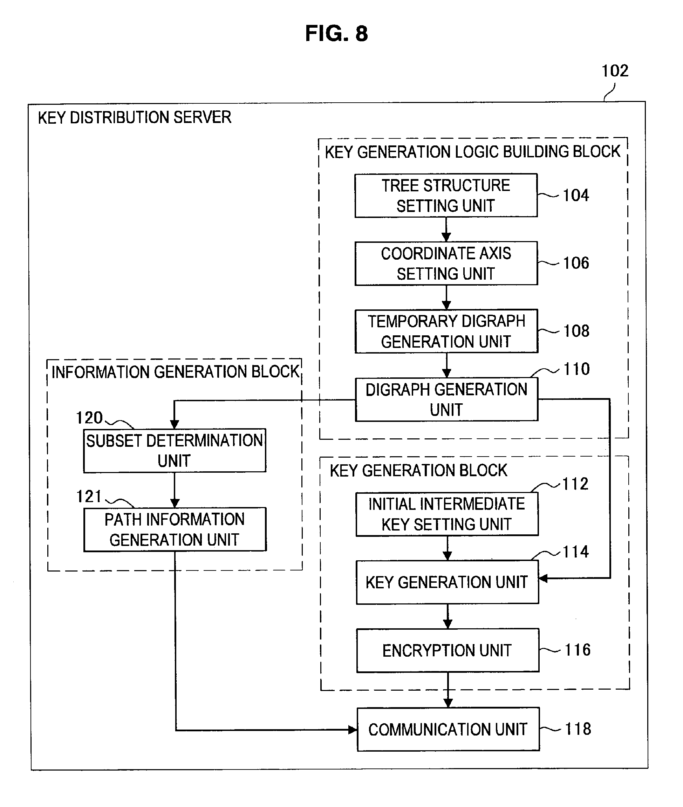

The configuration of the key distribution server 102 according to the present embodiment will now be described with reference to FIG. 8. FIG. 8 is an explanatory view showing a configuration of the key distribution server 102 and the terminal device 122 according to the present embodiment.

With reference to FIG. 8, the key distribution server 102 mainly includes a tree structure setting unit 104, a coordinate axis setting unit 106, a temporary digraph generation unit 108, a digraph generation unit 110, an initial intermediate key setting unit 112, a key generation unit 114, an encryption unit 116, a communication unit 118, and a subset determination unit 120. The tree structure setting unit 104, the coordinate axis setting unit 106, the temporary digraph generation unit 108, and the digraph generation unit 110 are collectively referred to as "key generation logic building block". Similarly, the initial intermediate key setting unit 112 and the key generation unit 114 are collectively referred to as "key generation block". The coordinate axis setting unit 106, the temporary digraph generation unit 108, and the digraph generation unit 110 are examples of the set relationship information generation unit or the set relationship information acquiring unit. The communication unit 118 is an example of the key generation path information providing unit or the encrypted information providing unit.

[Key generation logic building block]

First, the key generation logic building block will be described in detail.

(Tree structure setting unit 104)

First, the tree structure setting unit 104 will be described. The tree structure setting unit 104 can generate the binary tree structure (see FIG. 3) similar to the AI05 system. The tree structure setting unit 104 first sets the binary tree structure formed by n leaf nodes 1 to n (n is a natural number), the root node, and a plurality of intermediate nodes other than the root node and the leaf node. The tree structure setting unit 104 then sets the number of the leaf node positioned at the left end as $l_v$ and the number of the leaf node positioned at the right end as $r_v$ of the plurality of leaf nodes arranged at the lower order of the intermediate node v or the root node v. The tree structure setting unit 104 assigns the set $(1 \rightarrow n)$ and the set $(2 \leftarrow n)$ with respect to the root node. The tree structure setting unit 104 corresponds the set $(l_v+1 \leftarrow r_v)$ if the intermediate node v is positioned on the left side of the parent node and corresponds the set $(l_v \rightarrow r_v-1)$ if the intermediate node v is positioned on the right side of the parent node with respect to an arbitrary intermediate node v forming the binary tree.

(Coordinate axis setting unit 106)

The coordinate axis setting unit 106 will be described. The coordinate axis setting unit 106 sets the horizontal coordinate axis based on a rule similar to the AI05 system. First, the coordinate axis setting unit 106 sets a plurality of horizontal coordinate axes. The coordinate axis setting unit 106 then corresponds the plurality of subsets contained in the set $(1 \rightarrow n-1)$ to each coordinate point on one horizontal coordinate axis so that the inclusion relation becomes larger in order from the left side towards the right. Similarly, coordinate axis setting unit 106 corresponds the plurality of subsets contained in the set $(l_v \rightarrow r_v-1)$ to each coordinate point on another one horizontal coordinate axis so that the inclusion relation becomes larger in order from the left side towards the right. The coordinate axis setting unit 106 repeats a similar process for all the sets $(l_v \rightarrow r_v-1)$ corresponded to the intermediate nodes forming the binary tree.
The coordinate axis setting unit 106 then corresponds the plurality of subsets contained in the set $(2 \leftarrow n)$ to each coordinate point on another further one horizontal coordinate axis so that the inclusion relation becomes larger in order from the right side towards the left. Similarly, the coordinate axis setting unit 106 corresponds the plurality of subsets contained in the set $(l_v+1 \leftarrow r_v)$ to the coordinate point on another further one horizontal coordinate axis so that the inclusion relation becomes larger in order from the right side towards the left. The coordinate axis setting unit 106 repeats a similar process for all the sets $(l_v+1 \leftarrow r_v)$ corresponded to the intermediate nodes forming the binary tree.
The coordinate axis setting unit 106 generates two temporary coordinate points on the right side of the coordinate point positioned at the right end of the horizontal coordinate axis corresponding to the set $(1 \rightarrow n-1)$. The coordinate axis setting unit 106 then generates two temporary coordinate points on the right side of the coordinate point positioned at the right end of the horizontal coordinate axis corresponding to the set $(l_v \rightarrow r_v-1)$, The coordinate axis setting unit 106 also generates two temporary coordinate points on the left side of he coordinate point positioned at the left end of the horizontal coordinate axis corresponding to the set $(2 \leftarrow n)$ and the horizontal coordinate axis corresponding to the set $(l_v+1 \leftarrow r_v)$.
Through the above processes, the coordinate axis setting unit 106 can set the horizontal coordinate axis for forming the digraph with respect to the set corresponded to all the nodes forming the binary tree. Means for forming the digraph on each horizontal coordinate axis generated by the coordinate axis setting unit 106 will now be described below.

(Temporary digraph generation unit 108)

The temporary digraph generation unit 108 will be described. The temporary digraph generation unit 108 generates a temporary digraph I' through a method similar to the method of generating the digraph H in the AI05 system. First, the temporary digraph generation unit 108 sets a predetermined integer k as a parameter. The temporary digraph generation unit 108 determines the integer x satisfying $n^{(x-1)/k} < r_v - l_v + 1 \leq n^{x/k}$. The temporary digraph generation unit 108 forms a rightward directional branch having a length of $n^{i/k}$ ($i = 0 \sim x-1$) on the horizontal coordinate axis corresponding to the set ($1 \rightarrow n-1$) and the set ($l_v \rightarrow r_v-1$), The temporary digraph generation unit 108 forms a leftward directional branch having a length of $n^{i/k}$ ($i = 0 \sim x-1$) on the horizontal coordinate axis corresponding to the set ($2 \leftarrow n$) and the set ($l_v + 1 \leftarrow r_v$).

As described above, the generation of the directional branch starts from the temporary coordinate point arranged adjacent to the coordinate point corresponding to the subset (i.e., subset including one user) having the least number of elements of the subsets in the AI05 system. It is to be noted that in the A06(A+B) system, the generation of the directional branch starts from the coordinate point corresponding to the subset (i.e., subset including one user) having the least number of elements of the subsets.

The temporary digraph generation unit 108 then erases all directional branches having the temporary coordinate point on the horizontal coordinate axis as the starting end or the terminating end for the directional branches on all the horizontal coordinate axes. With respect to all coordinate points on all horizontal coordinate axes, if the directional branch reaching one coordinate point exists in plurals, the temporary digraph generation unit 108 erases all directional branches other than the directional branch of longest length from the plurality of directional branches reaching the relevant coordinate point. The temporary digraph generation unit 108 adds the rightward directional branch having length of one with the temporary coordinate point positioned on the left side as the terminating end of the temporary coordinate points generated on the horizontal coordinate axis corresponding to the set ($1 \rightarrow n-1$). That is, the temporary digraph generation unit 108 executes the process of following Equation (3) to generate the temporary digraph I'($1 \rightarrow n$) corresponding to the set ($1 \rightarrow n$) corresponded to the root node.

[Equation 3]

$$E (I'(1 \rightarrow n-1)) \cup \{([1, n-1], [1, n])\} \quad \cdots (3)$$

Through the above processes, the temporary digraph generation unit 108 can form the temporary digraph I' configured by the directional branch longer than in the AI05 system. This algorithm is based on the fundamental concept of the A06(B) system. The amount of calculation for the terminal device 122 to generate the key can be reduced by applying such algorithm.

(Algorithm)

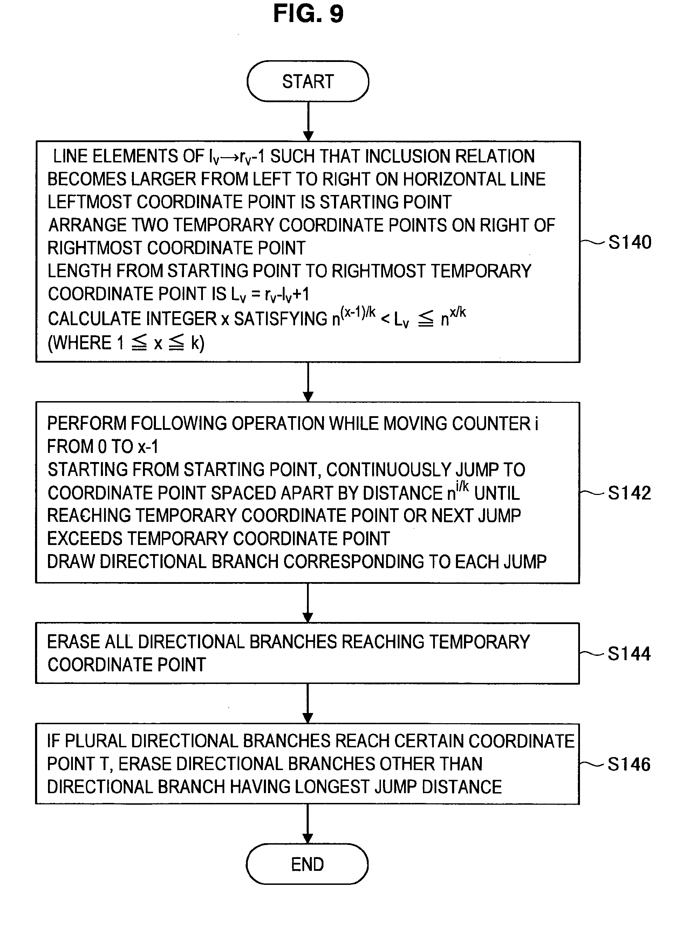

A flow of the process executed by the coordinate axis setting unit 106 and the temporary digraph generation unit 108 will be briefly organized with reference to FIG. 9. The flowchart shown in FIG. 9 shows, by way of example, a method of generating the digraph I'($l_v \rightarrow r_v-1$) corresponding to the set ($l_v \rightarrow r_v-1$).

(S140) First, the elements of the set ($l_v \rightarrow r_v-1$) are lined so that the inclusion relation becomes larger from the left to the right on the horizontal line. The left most coordinate point is the starting point. Two temporary coordinate points are arranged on the right of the right most coordinate point. The length from the starting point to the right most temporary coordinate point is $L_v = r_v - l_v + 1$. An integer x ($1 \leq x \leq k$) satisfying $n^{(x-1)/k} < L_v \leq n^{x/k}$ is then calculated.

(S142) The following operation is then performed while moving the counter i from 0 to x-1. Starting from the starting point, jump is continuously made from such coordinate point to the coordinate point spaced apart by $n^{i/k}$ until reaching the temporary coordinate point or when the next jump exceeds the temporary coordinate point. The directional branch corresponding to each jump is thereafter generated.

(S144) All the directional branches reaching the temporary coordinate point are then erased.

(S146) If a plurality of directional branches reach a certain coordinate point T, the directional branches other than the directional branch having the longest jump distance are erased.

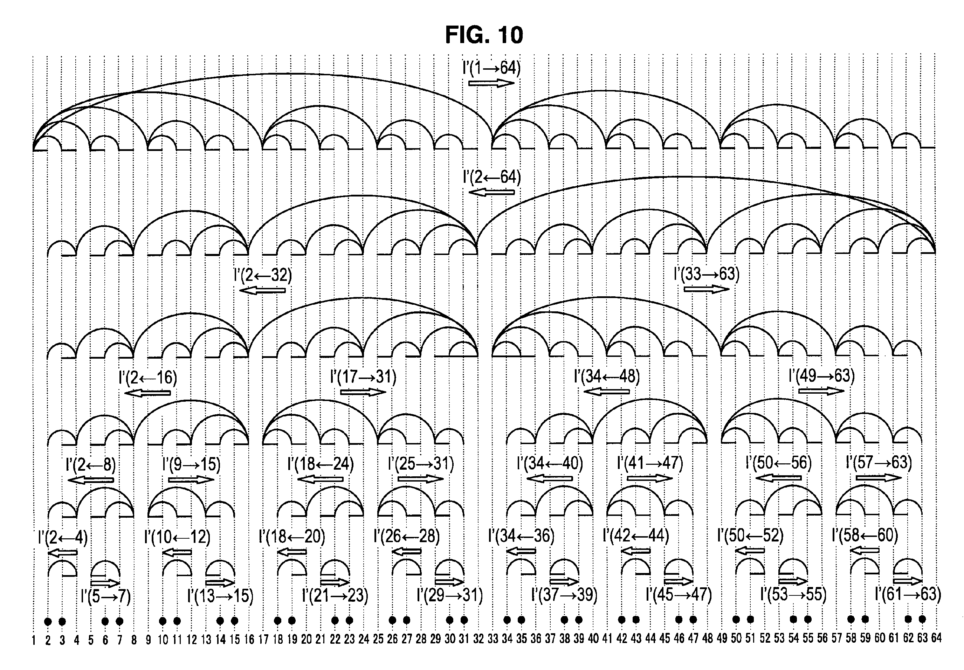

The temporary digraph I' shown in FIG. 10 can be generated by applying the algorithm. The temporary digraph I' of FIG. 10 is a case where the number of leaf nodes is n = 64 and the parameter is k = 6. An algorithm of replacing some of the plurality of directional branches forming the temporary digraph I' based on a predetermined rule, and generating the digraph I will be described below. The replacement process of the directional branch is mainly executed by the digraph generation unit 110.

(Digraph generation unit 110)

The digraph generation unit 110 will now be described. The digraph generation unit 110 generates the digraph I by replacing some of the plurality of directional branches configuring the temporary digraph I'. First, the digraph generation unit 110 selects the directional path in which the number of directional branches configuring the directional path is the largest of the directional paths contained in the temporary digraph I'. Such directional path is referred to as the longest directional path LP (Longest Path). The digraph generation unit 110 replaces the directional paths contained in the temporary digraph I' to the directional paths configured by a set of shorter directional branches under the condition that the number of directional branches of all directional paths does not exceed the number of directional branches of the longest directional path LP.

(Algorithm)

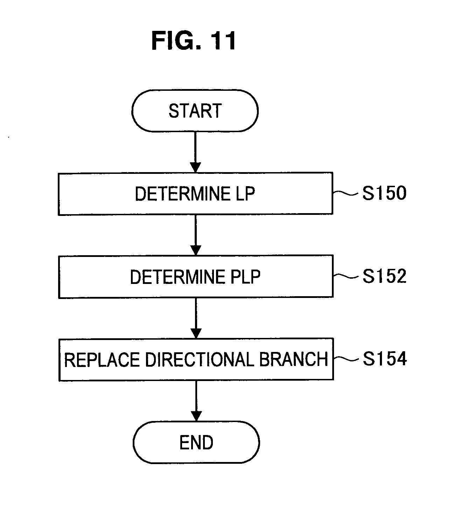

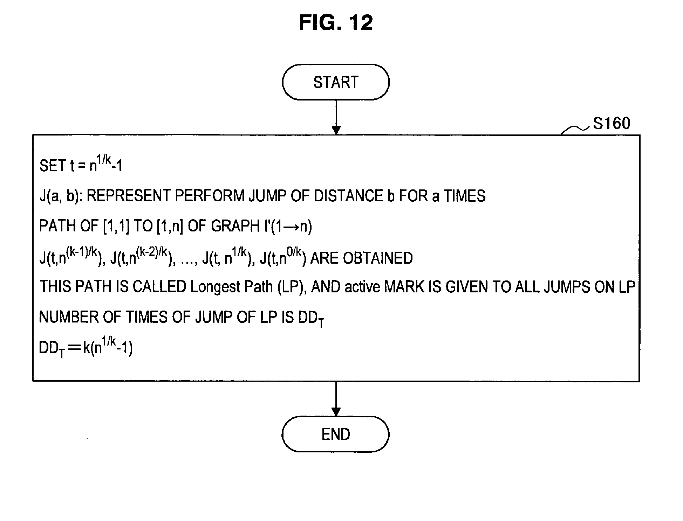

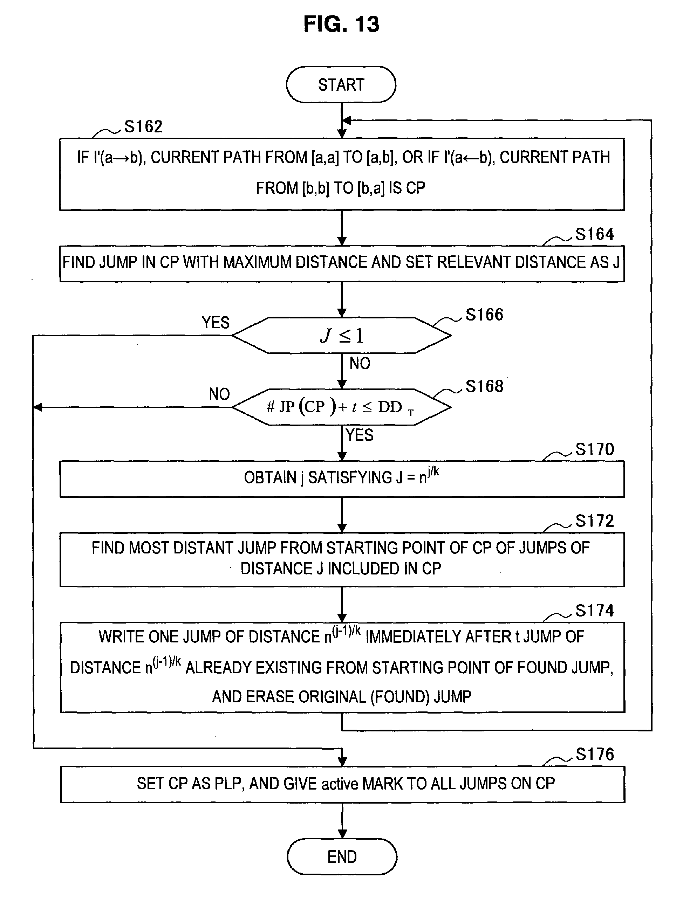

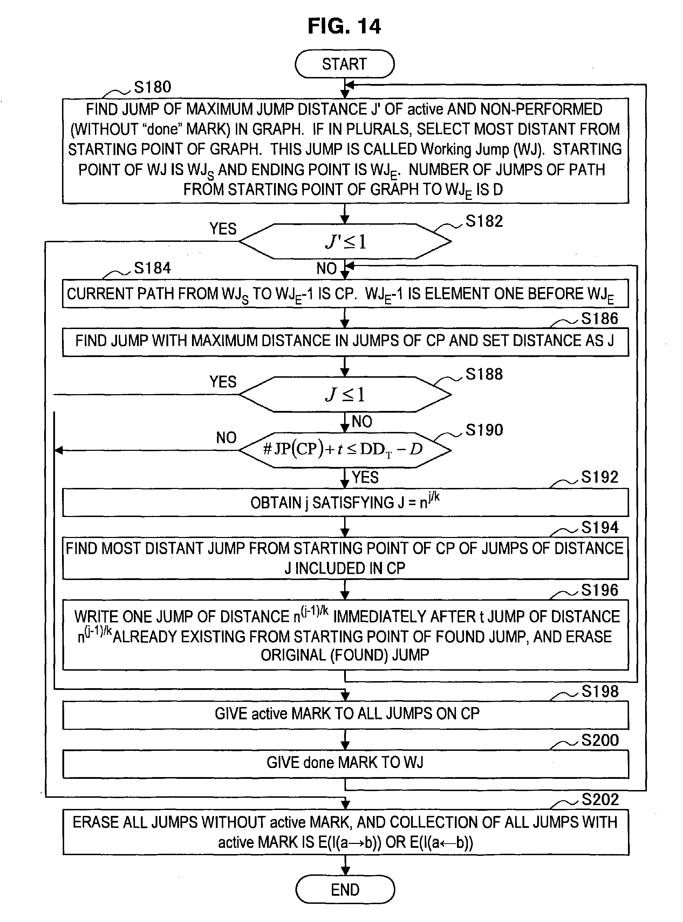

The algorithm for generating the digraph I will be described in detail with reference to FIGS. 11 to 14. FIG. 11 is an explanatory view showing an overall flow of the process for generating the digraph I. FIG. 12 is an explanatory view showing a flow of process for extracting the longest directional path LP. FIG. 13 is an explanatory view showing a flow of process for extracting the directional path PLP of longest length (Partially Longest Path) from the directional paths other than the longest directional path LP. FIG. 14 is an explanatory view showing a process of replacing the directional path of the temporary digraph I' with the directional path configured by a set of shorter directional branches.
As shown in FIG. 11, first longest directional path LP is extracted from the directional paths forming the digraph I' (S150). The directional path PLP of longest length is extracted from the directional paths other than the longest directional path LP of the temporary digraph I' (S152). The directional path PLP of longest length may be extracted for the temporary digraph I' corresponding to each subset. The predetermined directional branch configuring the directional path of the temporary digraph I' is then replaced with the shorter directional branch (S154). In this case, the directional branch is replaced such that the number of directional branches of all the directional paths does not exceed the number of directional branches of the longest directional path LP. That is, the worst value of the amount of calculation for generating the key does not increase than the AI05 system or the A06(B) system even if such replacement process is executed.
Each step shown in FIG. 11 will be more specifically described below.

(Details of S150)

First, the step (S160) in which the longest directional path LP is extracted will be described in detail with reference to FIG. 12. The following notations are introduced.
$DD_T$: Number of directional branches of the longest directional path LP
$J(a, b)$: a directional branches of length b exist continuously

First, $t = n^{1/k}-1$. The directional path $P([1,1], [1,n])$ from the coordinate point $[1,1]$ to the coordinate point $[1,n]$ of the temporary digraph I'$(1 \rightarrow n)$ is then considered. The directional path $P([1,1], [1,n])$ is expressed as $J(t,n^{(k-1)/k})$, $J(t, n^{(k-2)/k})$, ..., $J(t,n^{1/k})$, $J(t,n^{0/k})$. This directional path is referred to as longest directional path LP. The number of directional branches $DD_T$ of the longest directional path LP becomes $DD_T = k*(n^{1/k}-1)$. An active mark is set on all the directional branches configuring the longest directional path LP.

(Details of S152)

The process (S162 to S176) of extracting the directional path PLP of longest length for the temporary digraph I' corresponding to all the subsets other than the temporary digraph I' including the longest directional path LP will be described below with reference to FIG. 13. The following two notations are introduced.
CP(Current Path): Directional path in reference (current path)
#JP(CP): number of directional branches of current path

A current path CP from the starting point to the ending point of the digraph I' is first determined. If the current path is included in the digraph I'$(a \rightarrow b)$, the directional path $P([a,a], [a,b])$ is the current path CP, and if included in the digraph I'$(a \leftarrow b)$, the directional path $P([b,b], [b,a])$ is the current path CP (S162). The longest directional branch of the directional branches configuring the current path CP is selected, and the length thereof is set as J (S164). Whether or not $J \leq 1$ is determined (S166).
If $J \leq 1$, the current path CP is determined as the directional path PLP of longest length, and the active mark is set to all the directional branches included in the current path CP (S176). If J>1, whether or not $\#JP(CP)+t \leq DD_T$ is determined (S168). If not $\#JP(CP)+t \leq DD_T$, the current path CP is determined as the directional path PLP, and the active mark is set to all the directional branches included in the current path (S176). If $\#JP(CP) + t \leq DD_T$, a natural number j satisfying $J = n^{j/k}$ is calculated (S170).

The directional branch most distant from the stating point of the current path CP in the directional branches having length J included in the current path CP is extracted (S172). One directional branch having a length of $n^{(j-1)/k}$ is added immediately after the t directional branches having length $n^{(j-1)/k}$ extending from the starting point of the directional branch extracted in step S172, and the directional branch extracted in step S172 is removed (S174), and the process returns to step S162 to repeatedly execute the above processes.

A loop process between step S162 and step S174 is terminated when all the directional paths from the starting point to the ending point of the digraph I' are configured by directional branches having length of one, or when the number of directional branches configuring the directional path exceeds $DD_T$ by executing the replacement of greater number of directional branches.

(Details of S154)

The process (S180 to S202) of replacing the directional branch included in the temporary digraph I' with the short directional branch will be described in detail below with reference to FIG. 14.

First, the directional branch having the longest length J' is extracted from the active and non-performed (without done mark) directional branch in the graph. If the maximum directional branch exists in plurals, the directional branch most distant from the starting point of the temporary digraph I' is selected (S180). The selected directional branch is referred to as WJ (Working Jump). The starting point of the directional branch WJ is $WJ_S$ and the ending point is $WJ_E$. The number of directional branches included in the directional path from the starting point to the $WJ_E$ of the temporary digraph I' is noted as D.

Whether the length J' of the directional branch is $J' \leq 1$ is determined (S182). If $J' \leq 1$, all the directional branches without the active mark are erased, and a collection of all the directional branches with the active mark are set as $E(I(a \rightarrow b))$ or $E(I(a \leftarrow b))$ (S202). On the other hand, if not $J' \leq 1$, the directional path from $WJ_S$ to $WJ_E-1$ is set as the current path CP (S184). Here, $WJ_E-1$ represents the element one before $WJ_E$.

The longest directional branch is selected from the directional branches included in the current path CP, and the length thereof is set as J (S186). Whether or not the length J of the directional branch is $J \leq 1$ is determined (S188). If $J \leq 1$, the active mark is given to all the directional branches included in the current path CP (S198). The done mark is given to the WJ (S200), and the process returns to the process of step S180. If not $J \leq 1$, whether or not $\#JP(CP) + t \leq DD_T-D$ is determined (S190). If not $\#JP(CP) + t \leq DD_T-D$, the process returns to step S180 after the processes of steps S198 and S200. If $\#JP(CP) + t \leq DD_T-D$, j satisfying $J = n^{j/k}$ is calculated (S192).

If the directional branch having length J included in the current path CP exists in plural, the directional branch at a position most distant from the starting point of the current path CP is extracted (S194). One directional branch having a length of $n^{(j-1)/k}$ is added immediately after the $n^{1/k}-1$ directional branches having length of $n^{(j-1)/k}$ extending from the starting point of the directional branch extracted in step S194, and the directional branch extracted in step S194 is erased (S196). The process returns to the process of step S184.

A loop process between step S184 and step S196 is terminated when all the directional paths from the $WJ_S$ to the $WJ_E-1$ are configured by directional branches having length of one, or when the number of directional branches included in the directional path from the $WJ_S$ to the $WJ_E-1$ exceeds $DD_T$ by replacing greater number of directional branches. The loop process between steps S180 and S200 is terminated at the point the directional branch not set with done and having a length of greater than or equal to two are all erased from the directional branches included in the temporary digraph I'.

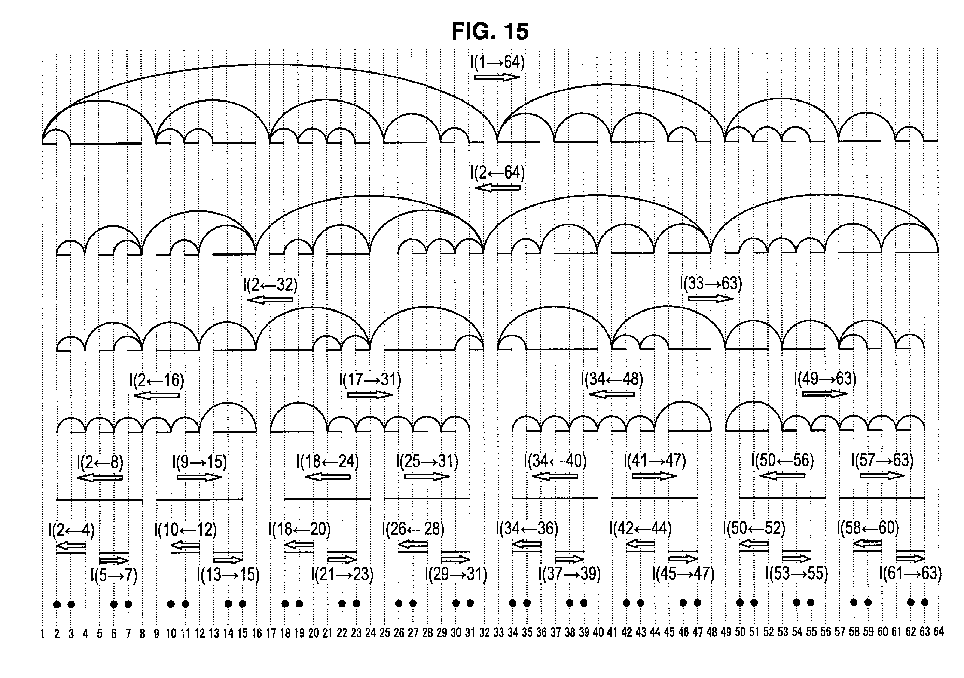

The digraph I shown in FIG. 15 is generated by applying the above-described algorithm to the temporary digraph I'. The digraph I is generated for a case of number of contractant n = 64, parameter k = 6. Through the use of such digraph I, the amount of calculation necessary for each terminal device 122 to generate the key, and the number of keys to be held by each terminal device 122 can be reduced compared to the AI05 system.

[Key generation block]

The details of the key generation block will be described below with reference again to FIG. 8. The key generation block is mainly configured by the initial intermediate key setting unit 112, the key generation unit 114, and the encryption unit 116.

(Initial intermediate key setting unit 112)

The initial intermediate key setting unit 112 generates an intermediate key corresponding to the route of the digraph I of all the intermediate nodes and the root nodes included in the logical binary tree. For instance, the initial intermediate key setting unit 112 may set the intermediate key corresponding to each route by generating the pseudo-random sequence by the PRSG, or may set the intermediate key of each route by a predetermined numerical value.

(Key generation unit 114)

The key generation unit 114 generates the intermediate key or the set key using the PRSG. The key generation unit 114 can generate the desired intermediate key or the set key by executing the pseudo-random sequence generation calculation based on the digraph H of the AI05 system, the digraph I of the A06(A+B) system, the digraph of the A06(A) system, the digraph of the A06(B) system, or the digraph of other systems. As described above, when the intermediate key corresponding to the starting end of the directional branch configuring the digraph is input, the PRSG outputs the set key corresponding to such intermediate key and the intermediate key corresponding to the terminating end of such directional branch. If a plurality of directional branches extends from a certain coordinate point on the horizontal coordinate axis of the digraph, a plurality of intermediate keys can be derived by inputting the intermediate key corresponding to such coordinate point.

In the AI05 system, the input and output of the PRSG have been defined with Equation (2), but in the present embodiment, the input and output of the PRSG are defined by $t(S_1)\|...\|t(S_k)\|k(S_0)\leftarrow PRSG(t(S_0))$. In other words, the output of the PRSG by the AI05 system is such that the output of $(d+1)\lambda$ bits with respect to the input of $\lambda$ bits is output when the number of directional branches having the coordinate point corresponding to the input intermediate key as the starting point is d. The PRSG according to the present embodiment, on the other hand, the output of $(k+1)\lambda$ bits is output irrespective of the value of d. Here, k is a system parameter.

In the present embodiment, when the intermediate key $t(S_0)$ corresponding to the subset So is input to the PRSG, the output is $t(S_1)\|...\|t(S_k)\|k(S_0)$. The portion of $t(S_1)\|...\|t(S_k)$ contained in the output is the intermediate key of the corresponding subset $S_1, ..., S_k$ for each coordinate point or the ending point of the directional branch having the coordinate point corresponding to the subset $S_0$ as the starting point. The length of the directional branch connecting the coordinate point corresponding to the subset $S_0$ and the coordinate point corresponding to the subset $S_i$ becomes $n^{(i-1)/k}$, For instance, if the length of the directional branch connecting the coordinate point corresponding to the subset $S_0$ and the coordinate point corresponding to the subset $S_i$ is $n^{2/k}$, the portion of $\lambda$ bits third from the beginning of the output of the PRSG ($t(S_0)$) becomes $t(S_i)$. If the directional branch having length of $n^{(i-1)/k}$ does not extend from the coordinate point corresponding to the subset $S_0$, the portion of $t(S_i)$ will be output from the PRSG but will not be used.

For instance, when the intermediate key $t(S_0)$ corresponding to the coordinate point $S_0$ on the digraph I is input to the PRSG, the key generation unit 114 can derive the intermediate keys $t(S_1), t(S_2), ..., t(S_m)$ corresponding to the coordinate points $S_1, S_2, ..., S_m$ of the terminating end and the set key $k(S_0)$ for a plurality of directional branches having the coordinate point $S_0$ as the starting end. Here, m indicates the number of directional branches extending from the coordinate point $S_0$. If the intermediate key is not used, the set key $k(S_0)$ may be input to the PRSG to derive a plurality of set keys $k(S_1), k(S_2), ..., k(S_m)$.

(Encryption unit 116)

The encryption unit 116 encrypts the content or the content key using the set key, and generates an encrypted text. The encryption unit 116 encrypts the content or the content key using one or more set keys corresponding to a predetermined subset of all the subsets configuring the set system SS. Therefore, a plurality of encrypted texts may be generated with respect to one content or content key.

[Information generation block]

The details of the information generation block will be described with reference again to FIG. 8. The information generation block is mainly configured by the subset determination unit 120, and the path information generation unit 121. The communication unit 118 will also be described.

(Subset determination unit 120)

The subset determination unit 120 determines the set key for encrypting the content or the content key. That is, the subset determination unit 120 extracts at least one subset including the terminal device 122 of a predetermined permitted contractant, and determines the type of set key to be distributed to each terminal device 122. For instance, the subset determination unit 120 determines the set (R) of the eliminating contractant not permitted to reproduce the content or the content key, and the set (N/R) of the permitted contractant excluding the set (R) of the eliminating contractant from the set (N) of all the contractant. That is, the set $(S_1, S_2, ..., S_m)$ of subsets configuring the set $(N/R = S_1 \cup S_2 \cup ... \cup S_m)$ of permitted contractant is determined by the subset contained in the set system SS.

(Path information generation unit 121)

The path information generation unit 121 references the information of the directional branches included in the digraph to extract the information of the directional path reaching a predetermined coordinate point from the starting point of the digraph. The predetermined coordinate point is a coordinate point corresponding to each subset selected by the subset determination unit 120. The path information generation unit 121 is an example of a key generation path information extracting unit.

As previously described, the key distribution system such as the AI05 system assumes that all terminal devices 122 hold the information of the digraph or each terminal device 122 calculates the digraph based on the algorithm of each key distribution system. However, this assumption oppresses the memory amount of the terminal device 122 and significantly increases the calculation load, and thus is not realistic.

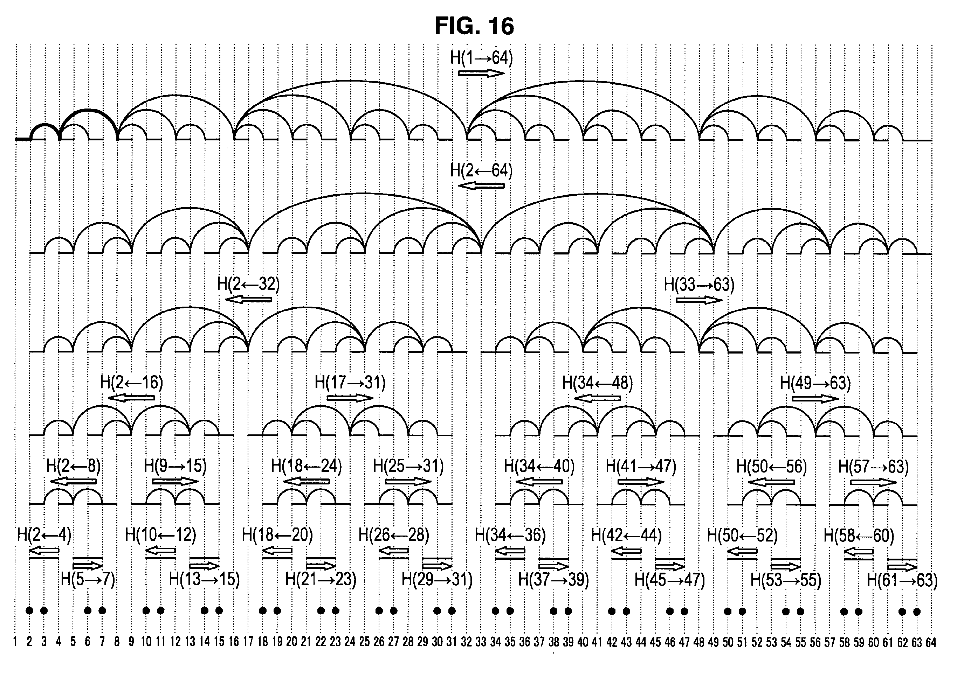

For instance, in the case of the digraph H (see FIG. 16) of the AI05 system, the terminal device 122 of the contractant 3 holds in advance the intermediate key $t(S_0)$ corresponding to the subset $S_0 = [1,4]$. Suppose a case where the subset determination unit 120 selects the subset $S = [1,8]$ and encrypts the content key using the set key k(S) corresponding thereto, the terminal device 122 of the contractant 3 first derives the intermediate key t(S) using the intermediate key $t(S_0)$ and the PRSG. However, to derive the intermediate key t(S), the terminal device 122 of the contractant 3 holds the information (part of heavy line of FIG. 16) that the directional branch exists from the coordinate point $S_0 = [1,4]$ to the coordinate point $S_1 = [1,8]$ on the digraph H(1→64).

However, as shown with the following Equation (4), since (n-1) directional branches exist on the digraph H (1→n), the information of all directional branches becomes difficult to hold when n becomes large. For instance, suppose the information of one directional branch can be expressed with the information amount of about 8 Bytes, about 32 GByte of storage capacity is required only for the information of the digraph H(1→n) since the realistic number of contractant is $n = 2^{32} = 4,294,967,296$.

[Equation 4]

$$t \cdot n^{0/k} + t \cdot n^{1/k} + \cdots + t \cdot n^{k-1/k}$$
$$= t \sum_{i=0}^{k-1} t \cdot n^{i/k}$$
$$= n - 1$$
$$\cdots (4)$$

The applicant of the subject application thus proposed a method of distributing, in addition to the information of the selected subset ([1,8] in the above example), to the terminal device 122 also the information of the directional path reaching the coordinate point corresponding to the subset from the starting point of the digraph. For instance, similar to the above example, if the subset [1,8] is selected, the information of the directional path (heavy line of FIG. 16) reaching the coordinate point [1,8] from the starting point [1,1] of the digraph H(1→64) is distributed to the terminal device 122. The configuration realizing such feature is the path information generation unit 121.

In the following description, the encrypted text in which the content key mek is encrypted with the set key $k(S_0)$ is noted as $C(k(S_0), mek)$. Furthermore, $SP_i$, $TP_i$, $S_i$ of the subset $S_i = [SP_i, TP_i]$ are defined as below.

(1) If the coordinate point $S_i$ is included in the rightward digraph

$SP_i$: smallest number in the elements of the subset $S_i$
$TP_i$: largest number in the elements of the subset $S_i$
$\Rightarrow S_i = \{SP_i, SP_{i+i}, ..., TP_i\}$

(2) If the coordinate point $S_i$ is included in the leftward digraph

$SP_i$: largest number in the elements of the subset $S_i$
$TP_i$: smallest number in the elements of the subset $S_i$
$\Rightarrow S_i = \{SP_i, SP_{i-1}, ..., TP_i\}$

(3) If $SP_i = TP_i$

$\Rightarrow S_i = \{SP_i\}$

Here, $SP_i$ and $TP_i$ are values greater than or equal to one and smaller than or equal to n. $SP_i$ represents the number of the vertical line (number of the contractant) intersecting the starting point of the digraph, and $TP_i$ represents the number of the vertical line (number of the contractant) intersecting the coordinate point of the selected subset.

First, the path information generation unit 121 generates the information of the directional path necessary to derive the subset $S_i$ and adds the same to the information of the contractant included in the subset $S_i$, as shown with the following Equation (5). The path information generation unit 121 according to the present embodiment adds the information (number of the intersecting vertical line $IP_{ij}$; $1 \leq IP_{ij} \leq n$) representing the terminating end of each directional branch contained in the directional path as information of the directional path. Assume that p ($p \leq DD_T$) directional branches exist in the directional path connecting the coordinate point $[SP_i, SP_i]$ and the coordinate point $[SP_i, TP_i]$ on the digraph.

[Equation 5]

$$S_i = (SP_i, IP_{i1}, \cdots, IP_{i(p-1)}, TP_i)$$
$$\cdots (5)$$

(Example 1)

For instance, consider a case where the subset determination unit 120 selects the subset S = [1,8] in the AI05 system in which the number of contractant is n = 64 and the parameter is k = 6. The path information generation unit 121 generates (see heavy line (directional path) of FIG. 16) S = (1, 2, 4, 8) as information of the subset S including the information of the directional path.

(Example 2)

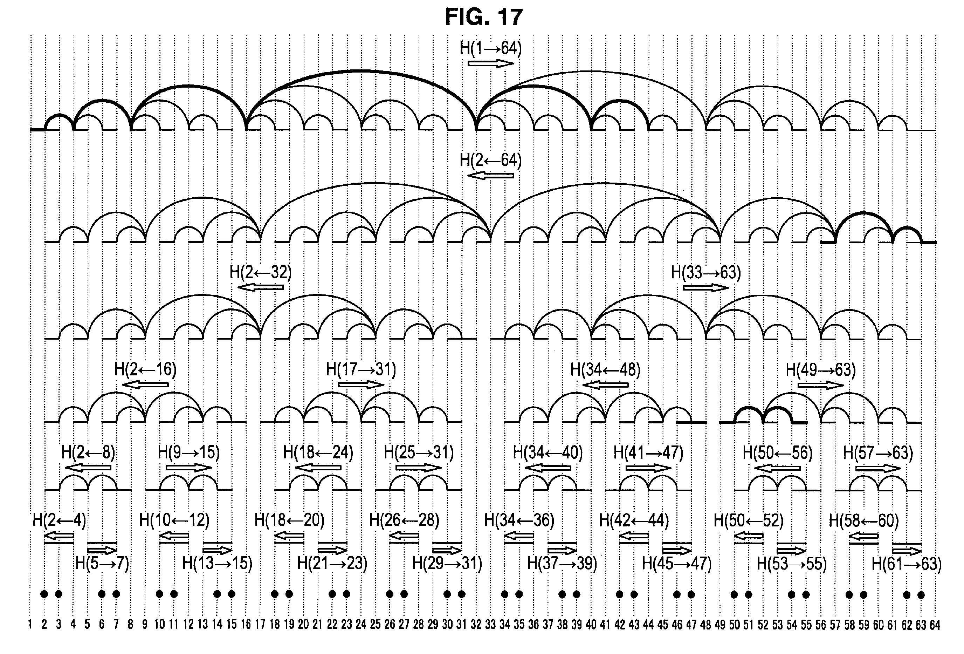

In another example, consider a case where the contractant 45 and the contractant 55 are eliminated in the AI05 system in which the number of contractant is n = 64 and the parameter is k = 6. In this case, if the subset determination unit 120 selects the subsets $S_1$ = [1,44], $S_2$ = [48,46], $S_3$ = [49,54], $S_4$ = [64,56], the path information generation unit 121 generates (see heavy line (directional path) of FIG. 17) the following information in which the information of the directional path is added to each subset.

$S_1$ = (1, 2, 4, 8 ,16, 32, 40, 44),
$S_2$ = (48, 47, 46),
$S_3$ = (49, 50, 52, 54),
$S_4$ = (64, 63, 61, 57, 56).

(Example 3)

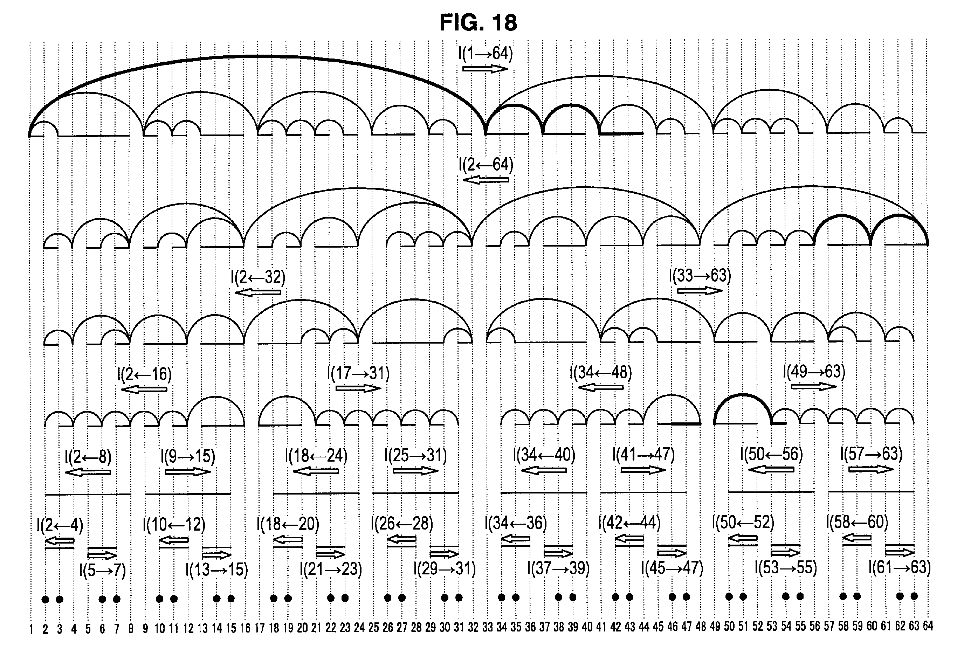

In another further example, consider a case where the contractant 45 and the contractant 55 are eliminated in the A06(A+B) system in which the number of contractant is n = 64 and the parameter is k = 6. In this case, if the subset determination unit 120 selects the subsets $S_1$ = [1,44], $S_2$ = [48,46], $S_3$ = [49,54], $S_4$ = [64,56], the path information generation unit 121 generates (see heavy line (directional path) of FIG. 18) the following information in which the information of the directional path is added to each subset.

$S_1 = (1, 33, 37, 41, 42, 43, 44)$,
$S_2 = (48, 47, 46)$,
$S_3 = (49, 53, 54)$,
$S_4 = (64, 60, 56)$.

As described above, the information of the directional path is expressed by p+1 number $IP_{ij}$ for one subset. Since $p \leq DD_T$ and a memory region of log(n) bits is required to express each number $IP_{ij}$, it can be recognized that a maximum of $(DD_T+1)*\log(n)$ bits is required to represent one subset. However, the value of $DD_T$ differs for every key distribution system adopted. For instance, $DD_T = (2k-1)*(n^{1/k}-1)$ in the AI05 system, and $DD_T = k(n^{1/k}-1)$ in the A06(A+B) system.

(Communication unit 118)

The communication unit 118 distributes the content or the content key encrypted by the encryption unit 116 to all terminal devices 122 corresponding to the leaf nodes. The communication unit 118 also distributes a predetermined intermediate key to the terminal device 122 based on the digraph I. In this case, the communication unit 118 distributes the minimum intermediate key such that each terminal device 122 can derive all the intermediate keys corresponding to the subset to which it is included. The communication unit 118 also distributes information of a predetermined digraph to each terminal device 122. Furthermore, the communication unit 118 also distributes the information of the subsets $(S_1, S_2, ..., S_m)$ configuring the set configuring the set (N/R) of permitted contractant or the set $(N/R = S_1 \cup S_2 \cup ... \cup S_m)$ of the permitted contractant to each terminal device 122. In this case, the communication unit 118 also distributes the information of the directional path added by the path information generation unit 121.

[Configuration of terminal device 122]

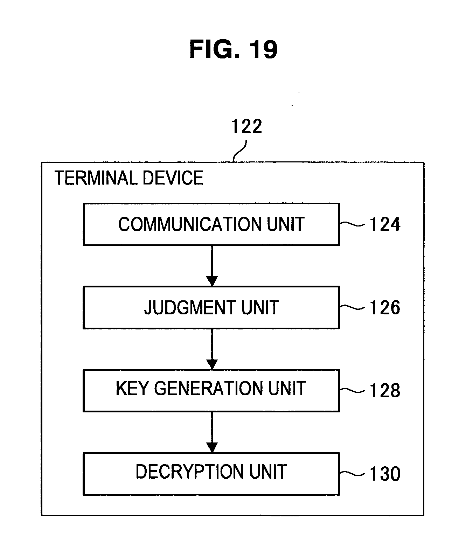

The configuration of the terminal device 122 according to the present embodiment will now be described with reference to FIG. 19. FIG. 19 is an explanatory view showing the configuration of the terminal device 122.
With reference to FIG. 19, the terminal device 122 is mainly configured by a communication unit 124, a judgment unit 126, a key generation unit 128, and a decryption unit 130. The terminal device 122 corresponds to the above-described user. The communication unit 124 is an example of the key generation path information acquiring unit and the encrypted information acquiring unit. The key generation unit 128 is an example of a key information generation unit. The decryption unit 130 is an example of an encrypted information decryption unit.

(Communication unit 124)

The communication unit 124 receives the information distributed from the key distribution server 102. For instance, the communication unit 124 receives information related to content, content key, intermediate key, and digraph, information related to permitted contractant, or the like distributed from the key distribution server 102. The communication unit 124 may also be configured to acquire information from a plurality of information sources (e.g., key distribution server 102) connected to wire or wireless network or an information source (e.g., information media such as optical disc device, magnetic disc device, or portable terminal device) directly or indirectly connected without through the network.

(Judgment unit 126)

The judgment unit 126 judges whether or not it is included as an element in one of the subsets corresponding to the set key. The judgment unit 126 judges whether or not it is included in one of the subsets selected by the subset determination unit 120 of the key distribution server 102. In this case, the judgment unit 126 references the information of the subset acquired from the key distribution server 102.

(Key generation unit 128)

The key generation unit 128 generates the desired intermediate key or the set key using the intermediate key distributed in advance and the PRSG. In this case, the key generation unit 128 references the information of the directional path acquired from the key distribution server 102, and generates the desired intermediate key or the set key based on the relevant information. If judged that a subset to which it is included does not exist by the judgment unit 126, the generation process of the intermediate key or the set key is terminated. The PRSG is substantially the same as the PRSG held by the key distribution server 102, where when the intermediate key corresponding to the starting end of the directional branch is input based on a predetermined digraph, the set key corresponding to the relevant intermediate key and the intermediate key corresponding to the terminating end of the relevant directional branch are output. It is to be noted that if a plurality of directional branches extends from one coordinate point, a plurality of intermediate keys corresponding to the terminating end of each directional branch is obtained when the intermediate key corresponding to the coordinate point is input.

(Algorithm)

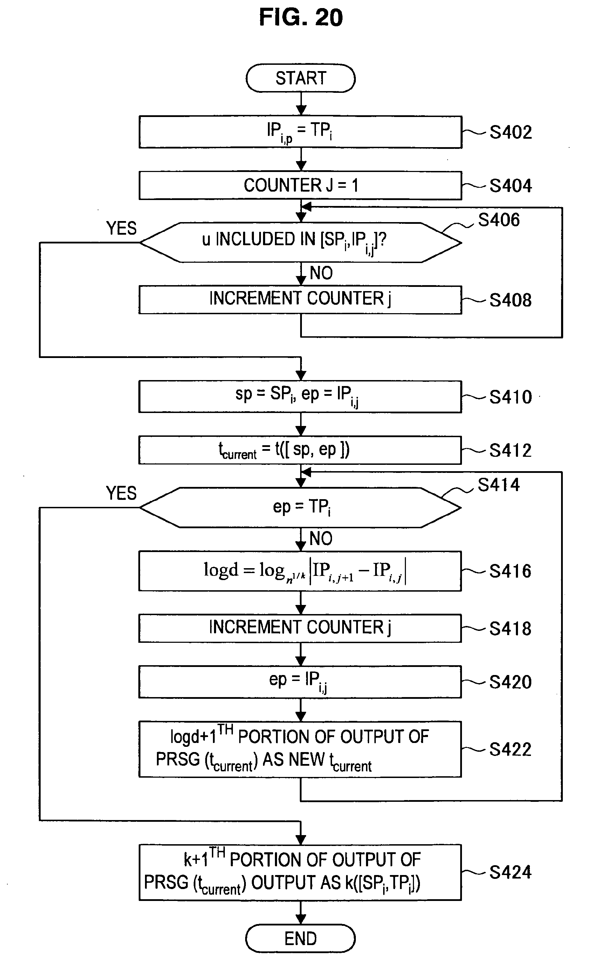

The key deriving algorithm by the terminal device 122 of the contractant u will now be described with reference to FIG. 20. FIG. 20 is an explanatory view showing a process in which the terminal device 122 of the contractant u derives the key. This process is mainly executed by the key generation unit 128.

First, the terminal device 122 of the contractant u is provided with information representing m subsets ($S_1$, ..., $S_m$) selected by the subset determination unit 120 of the key distribution server 102, and information $Sj = (SP_j, IP_{j,1}, ..., IP_{j,(p-i)}, TP_j)$ (here, j = 1, ..., m) of the directional path added for every subset by the path information generation unit 121. Suppose the judgment unit 126 judges that it is included in the subset $S_i = [SP_i.TP_i]$. Therefore, the key generation unit 128 references the information $Si = (SP_i, IP_{i,1}, ..., IP_{i,(p-1)}, TP_i)$ of the directional path in the process of generating the desired intermediate key or the set key. The process will be specifically described along the flowchart showing in FIG. 20.

With reference to FIG. 20, first, the value of $TP_i$ is set to the variable $IP_{i,p}$ (S402). The counter j is then initialized to 1 (S404). Whether or not the terminal device 122 of the contractant u is included in the subset $[SP_i.IP_{i,j}]$ is judged (S406). If not included, the counter j is incremented (S408), and the process again returns to step S406. If included, $SP_i$ is set to the variable sp and $IP_{i,j}$ is set to the variable ep (S410). In this case, the terminal device 122 of the contractant u holds in advance the intermediate key t([sp,ep]) corresponding to the subset [sp,ep].

The intermediate key t([sp,ep]) is then set to the variable $t_{current}$ (S412). Whether or not ep = $TP_i$ is then judged (S414). If ep = $TP_i$, $t_{current}$ is input to the PRSG, the set key k(correspond to $[SP_i, TP_i]$)) of the k+1$^{th}$ portion (subset[$SP_i$, $TP_i$] of when the output PRSG ($t_{current}$) is sectionalized by $\lambda$ bits is taken out (S424), and the generation process of the set key is terminated.

If not ep = $TP_i$, the variable logd (see Equation (6)) is calculated (S416). In other words, logd is a numerical value indicating to what power of $n^{1/k}$ the length of the directional branch from $IP_{i,j}$ to $IP_{i,j+1}$ is. The counter j is then incremented (S418), and $IP_{i,j}$ is set to the ep (S420). Then, $t_{current}$ is input to the PRSG, and the logd+1$^{th}$ portion of when the output PRSG ($t_{current}$) is sectionalized by $\lambda$ bits is set as the new $t_{current}$ (S422). The process thereafter returns to step S414.

[Equation 6]

$$log\ d = \log_{n^{1/k}} \left| IP_{i,(j+1)} - IP_{i,j} \right|$$
$$\cdots (6)$$

(Decryption unit 130)

The decryption unit 130 decrypts the content or the content key using the set key generated by the key generation unit 128. The decryption unit 130 can also execute the process of decrypting the content using the content key.

The configuration of the terminal device 122 according to the present embodiment has been described above. According to the above configuration, the terminal device 122 can generate the desired set key using the information of the directional path acquired from the key distribution server 102. As a result, the terminal device 122 may not hold or generate all the enormous amount of information of the digraph, and the memory amount and the calculation load can be suppressed to a realistic level.

<Second embodiment>

The configuration of the key providing system and the specific system related to the key distribution according to the second embodiment of the present invention will be described in detail below. The same reference numerals are denoted for the structural elements having substantially the same function configuration as the first embodiment, and the detailed description thereof will be omitted.

Description has been made that the characteristic of the key providing system 100 according to the first embodiment is in the information of the digraph provided from the key distribution server 102 to the terminal device 122. In particular, the characteristic lies in means for providing to the terminal device 122 the information of all directional branches included in the directional path reaching a predetermined coordinate point as the information of the digraph. In the first embodiment, information representing the terminating end of each directional branch has been considered as the information of the directional branch, but it is not limited thereto as long as the terminal device 122 can recognize the path that can reach the predetermined coordinate point.

In the second embodiment, means (path information generation unit 121) for providing to the terminal device 122 the information $LD_{i,j}$ representing the length of each directional branch included in the directional path as the information of the directional path reaching the coordinate point $S_i$ with respect to the coordinate point $S_i$ corresponding to a predetermined subset $S_i = [SP_i, TP_i]$ selected by the subset determination unit 120 arranged in the key distribution server 102 will be described.

The length $LD_{ij}$ of each directional branch is a value represented by Equation (7) with respect to the length $len_{i,j}$ of the directional branch positioned $j^{th}$ on the directional path reaching from the coordinate point $[SP_i, SP_i]$ to the coordinate point $[SP_i, TP_i]$ on a certain digraph. That is, the length of each directional branch is expressed as $LD_{i,j}$ power of $n^{1/k}$ (where, $0 \le LD_{i,j} < k$).

$$[\text{Equation 7}]$$

$$LD_{i,j} = \log_{n^{1/k}} len_{i,j}$$

$$\cdot \cdot \cdot (7)$$

The path information generation unit 121 arranged in the key distribution server 102 expresses the subset $S_i$ as in Equation (8) using the information $LD_{i,j}$ representing the length of each directional branch. That is, the path information generation unit 121 generates information of the directional path expressed by Equation (8) with respect to the subset $S_i$. The information of the directional path is similarly generated for all selected subsets $S_i(i = 1, ..., m)$.

$$[\text{Equation 8}]$$

$$S_i = (SP_i, LD_{i,1}, \cdot \cdot \cdot, LD_{i,p-1}, LD_{i,p})$$

$$\cdot \cdot \cdot (8)$$

(Example 1)

For instance, consider a case where the contractant 45 and the contractant 55 are eliminated in the AI05 system in which the number of contractant is n = 64 and the parameter is k = 6. In this case, if the subset determination unit 120 selects the subsets $S_1 = [1,44]$, $S_2 = [48,46]$, $S_3 = [49,54]$, $S_4 = [64,56]$, the information generated by the path information generation unit 121 according to the first embodiment is expressed as below (see FIG. 17).

(Case of first embodiment)

$S_1 = (1, 2, 4, 8, 16, 32, 40, 44)$,
$S_2 = (48, 47, 46)$,
$S_3 = (49, 50, 52, 54)$,
$S_4 = (64, 63, 61, 57, 56)$.

Under the condition same as the first embodiment, the information generated by the path information generation unit 121 according to the second embodiment based on the length of the directional branch is expressed as below.

(Case of second embodiment)

$S_i$ = (1, 0, 1,2,3,4,3,2),
$S_2$ = (48, 0, 0),
$S_3$ = (49, 0, 1, 1),
$S_4$ = (64, 0, 1, 2, 0).

(Example 2)

In another example, consider a case where the contractant 45 and the contractant 55 are eliminated in the A06 (A+B) system in which the number of contractant is n = 64 and the parameter is k = 6. In this case, if the subset determination unit 120 selects the subsets $S_1$ = [1,44], $S_2$ = [48,46], $S_3$ = [49,54], $S_4$ = [64,56], the information generated by the path information generation unit 121 according to the first embodiment is expressed as below (see FIG. 18).

(Case of first embodiment)

$S_1$ = (1, 33, 37, 41, 42, 43, 44),
$S_2$ = (48, 47, 46),
$S_3$ = (49, 53, 54),
$S_4$ = (64, 60, 56).

Under the condition same as the first embodiment, the information generated by the path information generation unit 121 according to the second embodiment based on the length of the directional branch is expressed as below.

(Case of second embodiment)

$S_1$ = (1, 5, 2, 2, 0, 0, 0),
$S_2$ = (48, 0, 0),
$S_3$ = (49, 4, 0),
$S_4$ = (64, 2, 2).

As described above, when the second embodiment is applied, the information of the directional path related to one subset is represented by one starting point information $SP_i(1 \leq SP_i \leq n)$ and p length information $IP_{i,j}(0 \leq IP_{i,j} \leq k-1)$. Furthermore, $p \leq DD_T$, and each subset is represented by the data of $\log(n) + DD_T*\log(k)$ bits. In the case of the first embodiment, $(DD_T+1)*\log(n)$ bits are necessary to represent one subset. Since $k|\log(n)$, $\log(k) \leq \log(\log(n)) < \log(n)$, and the relationship of $\log(n) + DD_T*\log(k) < (DD_T+1)*\log(n)$ is obtained. Therefore, the information for representing each subset $S_i$ can be reduced by applying the second embodiment than by applying the first embodiment. As a result, the amount of information provided from the key distribution server 102 to the terminal device 122 can be reduced (save amount of communication or save capacity of recording medium).

Consideration is not made on how to represent the subset if the subset including one user such as $S_i$ = [3,3] is selected as the subset. In this case, $S_i$ = (3,3) is represented in the system of the first embodiment. Various representation methods can be contrived in the system of the second embodiment, and a method of representing with simply one numerical value such as $S_i$ = (3) can be considered as one representation method. Another representation method includes representing as $S_i$ = (3,⊥) using a special symbol ⊥. If the latter method is adopted, the second and subsequent users in the subset in which the number of users is two or more is typically an integer of greater than or equal to zero, and thus the number of users can be recognized as being one.

(Algorithm)

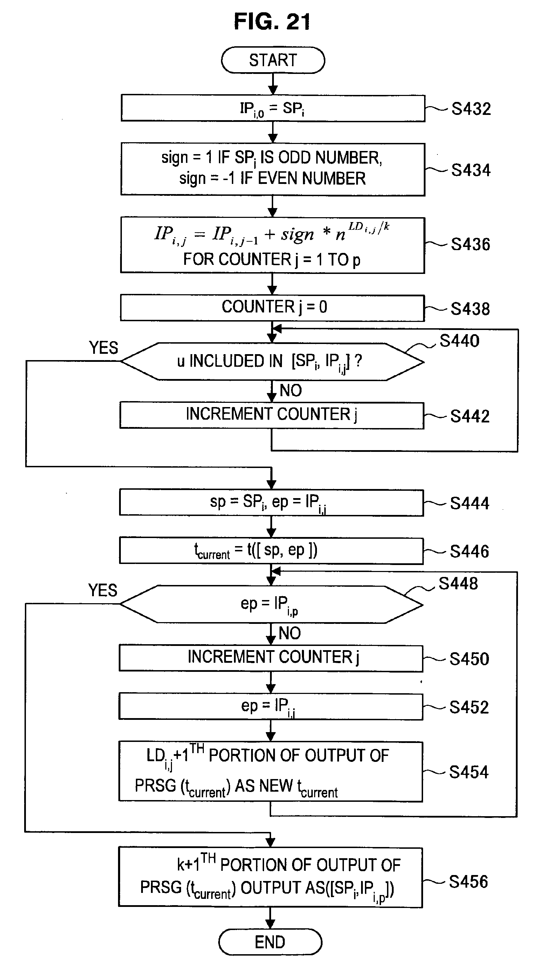

An algorithm in which the terminal device 122 according to the second embodiment generates a key using the information of each subset acquired from the key distribution server 102 will now be described with reference to FIG. 21. FIG. 21 is an explanatory view showing a process in which the terminal device 122 of the contractant u derives the key. This process is mainly executed by the key generation unit 128 arranged in the terminal device 122.

First, the terminal device 122 of the contractant u is provided with information representing m subsets ($S_1$, ..., $S_m$) selected by the subset determination unit 120 of the key distribution server 102, and information $S_j$ = ($SP_j$, $LD_{j,1}$,..., $LD_{j,p-1}$, $LD_{j,p}$) (here, j = 1, ..., m) of the directional path added for every subset by the path information generation unit 121. Suppose the judgment unit 126 judges that it is included in the subset $S_i = [SP_i, TP_i]$. Therefore, the key generation unit 128 references the information $S_i = (SP_i, LD_{i,1},...,LD_{i,p-1}, LD_{i,p})$ of the directional path in the process of generating the desired intermediate key or the set key. The process will be specifically described along the flowchart showing in FIG. 21.

With reference to FIG. 21, the value of $SP_i$ is first to the variable $IP_{i,0}$ (S432). The odd/even of $SP_i$ is then judged, where 1 is set to the variable sign if $SP_i$ is an odd number, and -1 is set if $SP_i$ is an even number (S434). The $IP_{i,j}$ (Equation 9)) is then calculated while moving the counter j from 1 to p (S436). Here, p indicates the number of integer value of greater than or equal to zero following $SP_i$ in the representation of the subset $S_1$. That is, in the case of he subset in which the number of user is one represented as $S_1 = (3)$ or $S_1 = (3,\perp)$ such as $S_1 = [3,3]$, p = 0, and thus the process of S436 is not executed. The counter j is then initialized (S438).

[Equation 9]

$$IP_{i,j} = IP_{i,j-1} + sign * n^{LD_{i,j}/k}$$
$$\cdots (9)$$

Whether or not the terminal device 122 of the contractant u is included in the subset $[SP_i, IP_{i,j}]$ is judged (S440). If the terminal device 122 of the contractant u is not included in the subset $[SP_i, IP_{i,j}]$, the counter j is incremented and the process again returns to step S440 (S442). If the terminal device 122 of the contractant u is not included in the subset $[SP_i, IP_{i,j}]$, the value of $SP_i$ is set to the variable sp, and the value of $IP_{i,j}$ is set to the variable ep (S444). The intermediate key t([sp,ep]) is then selected from the intermediate keys held in advance by the terminal device 122 of the contractant u and sets the same to $t_{current}$ (S446).

Whether or not ep is $IP_{i,p}$ is then judged (S448). If ep = $IP_{i,p}$, $t_{current}$ is input to the PRSG, the k+1th portion (correspond to set key k([SP_i, IP_{i,p}]) of when the output PRSG ($t_{current}$) is sectionalized by $\lambda$ bits is extracted (S456), and the generation process of the set key is terminated. If not ep = $IP_{i,p}$, the counter j is incremented (S450). The value of $IP_{i,j}$ is set to the variable ep (S452). The $t_{current}$ is input to the PRSG, $LD_{i,j}$+1th portion of when the output PRSG ($t_{current}$) is sectionalized by $\lambda$ bits is extracted and set to $t_{current}$ (S454). The process then returns to step S448.

The desired key can be generated using the algorithm described above. The key generation unit 128 according to the present embodiment is obviously not limited thereto, and the information $IP_{i,j}$ representing the terminating end of each directional branch may be calculated in advance from the information $LD_{i,j}$ representing the length of each directional branch contained in the information $S_i$ of the directional path acquired from the key distribution server 102, and the key may be calculated using the algorithm similar to the first embodiment.

[Effect]

Through application of the configuration according to each embodiment of the present invention, in the broadcast encryption system represented by AI05 system and the like, the terminal device 122 may not hold in advance the information of the digraph for generating the key when deriving the set key corresponding to each subset selected by the key distribution server 102, and thus the load on the amount of memory of the terminal device 122 can be reduced.

In the first embodiment, the information indicating the terminating end of all directional branches included in the directional path is added and distributed as the information of the directional path necessary for the terminal device 122 to generate the key. In the second embodiment, the information indicating the length of all directional branches included in the directional path is added and distributed as the information of the directional path necessary for the terminal device 122 to generate the key. The amount of information to distribute to the terminal device 122 can be reduced compared to the first embodiment by adopting the second embodiment.

[Application example of the key providing system 100]

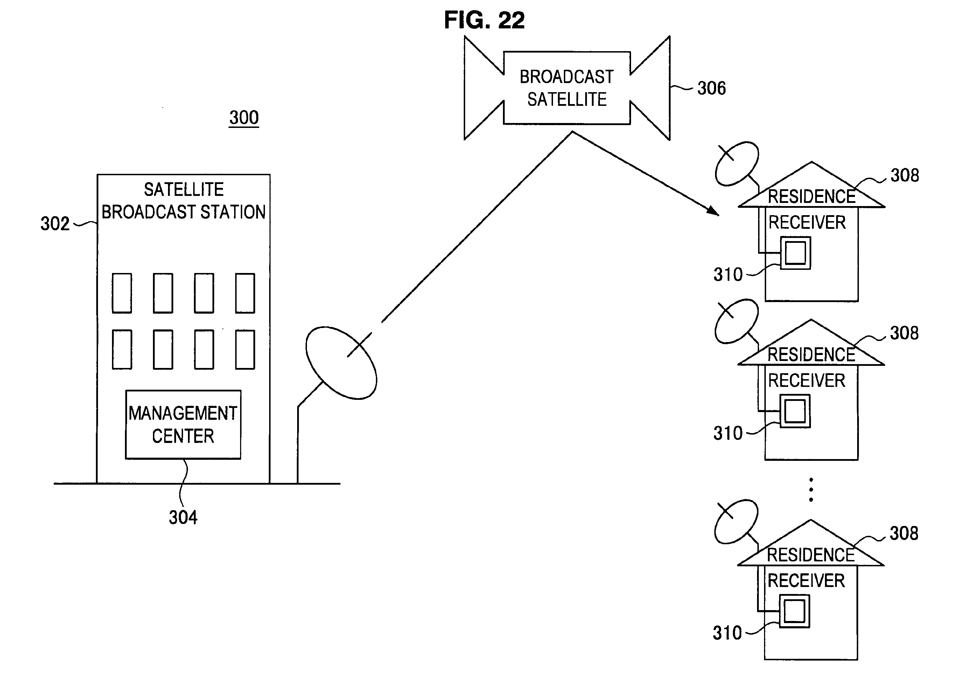

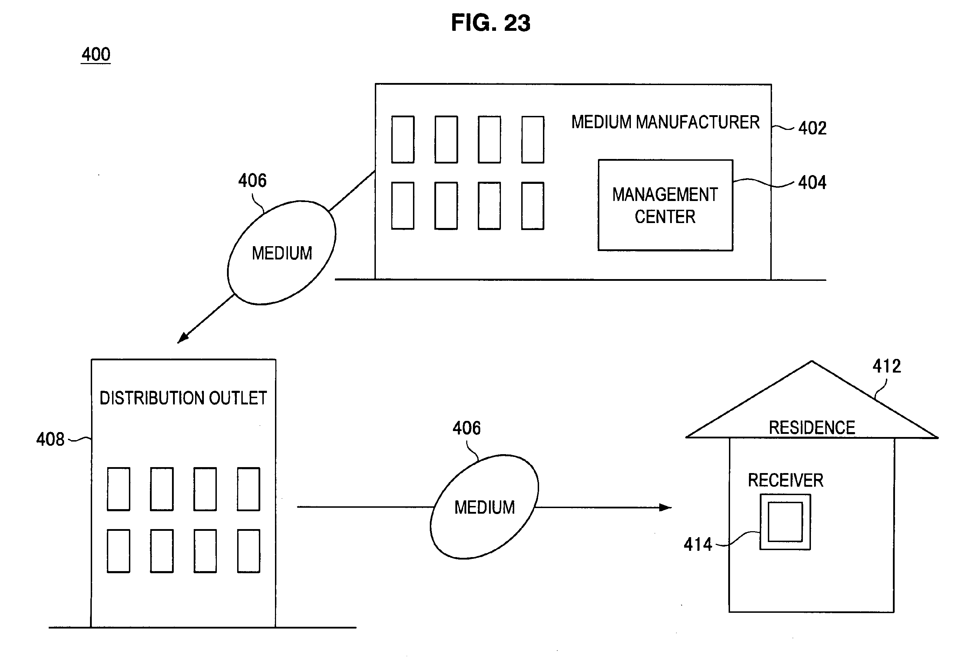

Lastly, the application example of the key providing system according to each embodiment will be briefly described with reference to FIGS. 22 and 23.

(Application example 1)

First, the configuration of a broadcast encryption system 300 will be described as one application example of the key providing system 100. FIG. 21 is an explanatory view showing a configuration of the broadcast encryption system 300 using broadcast satellite.

With reference to FIG. 22, the broadcast encryption system 300 is mainly configured to include a satellite broadcast station 302, a management center 304, a broadcast satellite 306, a residence 308, and a receiver 310. The broadcast encryption system 300 is a system for distributing the encrypted data (cipher text) to the receiver 310 arranged in the residence 308 via the broadcast channel. The broadcast channel is a satellite broadcast distribution channel, and the like. The cipher text is a content including encryption key, audio data, video data, text data, or the like.

First, the satellite broadcast station 302 is arranged with the management center (broadcast trusted center) 304 for transmitting data such as cipher text via the broadcast satellite 306. The management center 304 selects the key for encryption, and executes encryption of data and distribution control of data. That is, the management center 304 is one example of the key distribution server 102 according to each embodiment above. The receiver 310 installed in the residence 308 is one example of the terminal device 122 according to each embodiment above.

The broadcast satellite 306 broadcasts data such as cipher text to the receiver 310 through the management center 304 and the receiver 310 arranged in each residence 308. The receiver 310 is a satellite broadcast receiver and the like, and receives data broadcasted through the broadcast satellite 306. As shown in FIG. 22, the broadcast encryption system 300 may include plural receivers 310, in which case the management center 304 distributes data to the receiver group consisting of plural receivers 310. The management center 304 encrypts and distributes the broadcast data so that only the authenticated receiver 310 can decrypt the data.

The broadcast encryption system 300 serving as one application example of the key providing system 100 has been described above. In FIG. 22, the satellite broadcast has been described by way of example, but the broadcast encryption system 300 is also easily applicable to the encryption system using other broadcast channels such as cable television and computer network.

(Application example 2)

A configuration of a broadcast encryption system 400 will be described as another application example of the key providing system 100. FIG. 23 is an explanatory view showing a configuration of the broadcast encryption system 400 using a recording medium.

With reference to FIG. 23, the broadcast encryption system 400 is mainly configured by a medium manufacturer 402, a management center 404, a recording medium 406, a distribution outlet 408, a residence 412, and a receiver 414. The broadcast channel in the broadcast encryption system 400 is a recording medium 406 recorded with data.

First, the medium manufacturer 402 is arranged with the management center 404 for providing data such as cipher text to the residence 412 via the distribution outlet 408 using the recording medium 406. The management center 404 merely records data such as cipher text in the recording medium 406, and indirectly provides data such as cipher text using the recording medium 406. The recording medium 406 is a read-only medium (e.g., CD-ROM, DVD-ROM etc.), rewritable medium (e.g., CD-RW, DVD-RW, etc.), or the like. Similar to the application example 1, the management center 404 corresponds to the key distribution server 102 according to each embodiment above. There is a slight difference in that the data such as cipher text is recorded and provided in the recording medium, but the key distribution server according to the embodiment of the present invention can appropriately change a section for distributing information such as cipher text according to the embodiment as in this application example.

The medium manufacturer 402 sends the recording medium 406 recorded with data such as cipher text to the distribution outlet 408 such as retailer. The distribution outlet 408 then provides the medium 406 to each residence 412. For instance, the distribution outlet 408 sells the recording medium 406 to the individual corresponding to each residence 412. The individual brings home the recording medium 406 to the residence 412, and reproduces the data recorded on the recording medium 406 using the receiver 414. The receiver 414 is one example of the terminal device 122 according to each embodiment, and slightly differs in acquiring the data such as cipher text through the recording medium. However, the terminal device according to the embodiment of the present invention can appropriately change the section for acquiring the information such as cipher text according to the embodiment as in this application example. The receiver 414 is a CD player, a DVD player, or a computer equipped with the DVD-RW drive, and is configured by a device capable of reading out and reproducing the data recorded on the recording medium 406.

The broadcast encryption system 400 serving as one application example of the key distribution system 100 has been described above. In FIG. 23, the section for providing the data such as cipher text to the contractant through the recording medium 406 has been described by way of example. The key distribution server and the terminal device according to the embodiment of the present invention can change the configuration related to the distribution section of various information according to the embodiment.

The most suitable embodiments of the present invention have been described above with reference to the accompanied drawings, but it should be recognized that the present invention is not limited to such examples. It is apparent by those skilled in the art that various modifications and alterations can be contrived within the scope described in the Claims, which are understood to belong to the technical scope of the invention.

For instance, the logical binary tree Bt described above is assumed to have a structure in which the branches spread from the top to the bottom, but is not limited thereto, and may be configured such that the branches spread from the bottom to the top, from the left to the right, or from the right to the left. The changes related to such arrangement are realized by simply rotating and arranging the logical binary tree, and the configurations related to such changes also fall within substantially the same technical scope. The changes for mirror reversing the horizontal coordinate axis for forming the temporary digraph and the digraph also fall within the technical scope.

The key distribution server 102 according to each embodiment includes components for generating the digraph on its own, but is not limited thereto. The key distribution server 102 according to the embodiment of the present invention may include an acquiring unit for acquiring information related to a predetermined digraph, in which case some of or all of the tree structure setting unit 104, the coordinate axis setting unit 106, the temporary digraph generation unit 108, and the digraph generation unit 110 may not be arranged.

The key distribution server 102 according to each embodiment above includes the communication unit 118 for distributing content, content key, set key, intermediate key, information of subset corresponding to the permitted contractant, information of digraph, or the like to the terminal device 122, but the network is not necessarily used at all times to provide such information, as shown in application example 2. The key distribution server 102 may include a recording unit for recording information on a recording medium in place of the communication unit 118. In this case, the terminal device 122 may include a readout unit for reading the recording medium recorded with the information in place of the communication unit 124.

**Claims**

1. A key providing system including a plurality of terminal devices, and a key providing apparatus for providing key information used for encryption or decryption of information to the plurality of terminal devices, wherein
the key providing apparatus includes,

   a set relationship information acquiring unit for acquiring set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information,
   a key generation path information extracting unit for extracting the key generation path information of one part of the plurality of key generation path information from the plurality of key generation path information contained in the set relationship information, and
   a key generation path information providing unit for providing the key generation path information of one part extracted by the key generation path information extracting unit to the terminal device, and the terminal device includes,
   a key generation path information acquiring unit for acquiring the key generation path information of one part, and
   a key information generation unit for generating, from the key information corresponding to one of the plurality of set information, key information corresponding to another one of the plurality of set information based on the key generation path information of one part.

2. A key providing apparatus for providing key information used for encryption or decryption of information to a plurality of terminal devices; the key providing apparatus comprising:

   a set relationship information acquiring unit for acquiring set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information;
   a key generation path information extracting unit for extracting the key generation path information of one part of the plurality of key generation path information from the plurality of key generation path information contained in the set relationship information; and
   a key generation path information providing unit for providing the key generation path information of one part extracted by the key generation path information extracting unit to the terminal device.

3. The key providing apparatus according to claim 2, wherein the key generation path information providing unit includes a communication unit for transmitting the key generation path information to the terminal device through a network.

4. The key providing apparatus according to claim 2, wherein the key generation path information providing unit includes a recording unit for recording the key generation path information to a recording medium to provide to the terminal device.

5. The key providing apparatus according to claim 2, comprising:

an encryption unit for encrypting information using the key information corresponding to one of the plurality of set information; and
an encrypted information providing unit for providing the encrypted information to the terminal device.

6. The key providing apparatus according to claim 2, wherein the key generation path information acquiring unit acquires, as the set relationship information, a digraph formed by directional branches connecting coordinate points with respect to a plurality of coordinate points corresponded to the plurality of set information each indicating different combinations of the plurality of terminal devices.

7. The key providing apparatus according to claim 6, wherein the key generation path information extracting unit extracts, as the key generation path information of one part, one part of the digraph reaching a coordinate point corresponded to the set information to which the terminal device belongs.

8. The key providing apparatus according to claim 7, wherein the key generation path information extracting unit extracts, as the key generation path information of one part, information indicating a terminating end position of the directional branch configuring one part of the digraph.

9. The key providing apparatus according to claim 7, wherein the key generation path information extracting unit extracts, as the key generation path information of one part, information indicating a length of the directional branch configuring one part of the digraph.

10. The key providing apparatus according to claim 6, further comprising a key information generation unit for generating the key information $k(S_1)$, ..., $k(S_m)$ corresponding to coordinate points $S_1$, ..., $S_m$ of the terminating ends of all directional branches having a coordinate point $S_0$ as the starting end according to the input of the key information $k(S_0)$ corresponding to the coordinate point $S_0$.

11. The key providing apparatus according to claim 6, wherein
the key information is configured by a set key k for encrypting or decrypting information, and an intermediate key t for generating the set key k, and
the key providing apparatus further includes,

a key information generation unit for generating the set key $k(S_0)$ corresponding to the coordinate point $S_0$ and the intermediate key $t(S_1)$, ..., $t(S_m)$ corresponding to coordinate points $S_1$, ..., $S_m$ of the terminating ends of all directional branches having a coordinate point $S_0$ as the starting end according to the input of the intermediate key $t(S_0)$ corresponding to the coordinate point $S_0$.

12. A key providing apparatus for providing key information used for encryption or decryption of information to a plurality of terminal devices; the key providing apparatus comprising:

a set relationship information generation unit for generating set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information;
a key generation path information extracting unit for extracting the key generation path information of one part of the plurality of key generation path information from the plurality of key generation path information contained in the set relationship information; and

a key generation path information providing unit for providing the key generation path information of one part extracted by the key generation path information extracting unit to the terminal device.

13. A terminal device for generating key information used for encryption or decryption of information, the terminal device comprising:

a key generation path information acquiring unit for acquiring key generation path information of one part of a plurality of key generation path information extracted from set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information; and
a key information generation unit for generating, from the key information corresponding to one of the plurality of set information, key information corresponding to another one of the plurality of set information based on the key generation path information of one part.

14. The terminal device according to claim 13, wherein the key generation path information acquiring unit includes a communication unit for receiving the key generation path information through a network.

15. The terminal device according to claim 13, wherein the key generation path information acquiring unit includes a readout unit for acquiring a recording medium recorded with the key generation path information and reading out the key generation path information from the recording medium.

16. The terminal device according to claim 13, further comprising:

an encrypted information acquiring unit for acquiring information encrypted using the key information corresponding to another one of the plurality of set information; and
an encrypted information decryption unit for decrypting the encrypted information using the key information corresponding to another one of the plurality of set information generated by the key information generation unit.

17. The terminal device according to claim 13, wherein the key generation path information acquiring unit acquires, with respect to a plurality of coordinate points corresponded to the plurality of set information each indicating different combinations of the plurality of terminal devices, one part of a digraph reaching a coordinate point corresponded to the set information to which the terminal device belongs extracted from the digraph formed by directional branches connecting the coordinate points as the key generation path information of one part.

18. The terminal device according to claim 17, wherein the key generation path information acquiring unit acquires, as the key generation path information of one part, information indicating a terminating end position of the directional branch configuring one part of the digraph.

19. The terminal device according to claim 17, wherein the key generation path information acquiring unit acquires, as the key generation path information of one part, information indicating a length of the directional branch configuring one part of the digraph.

20. The terminal device according to claim 17, further comprising a key information generation unit for generating the key information $k(S_1)$ corresponding to a coordinate point $S_1$ of the terminating end of the directional branch according to an input of the key information $k(S_0)$ corresponding to a starting end $S_0$ of the directional branch.

21. The terminal device according to claim 17, wherein
the key information is configured by a set key k for encrypting or decrypting information, and an intermediate key t for generating the set key k; and
the terminal device further includes,

a key information generation unit for generating the set key $k(S_0)$ corresponding to a starting end $S_0$ of the directional branch and the intermediate key $t(S_1)$ corresponding to a terminating end $S_1$ of the directional branch according to an input of the intermediate key $t(S_0)$ corresponding to the starting end $S_0$ of the directional branch.

22. A key providing method for providing key information used for encryption or decryption of data to a plurality of terminal devices, the method comprising the steps of:

acquiring set relationship information including a plurality of set information each indicating different combinations of the plurality of terminal devices, and a plurality of key generation path information indicating a key generation path necessary for generating, from the key information corresponding to one of the plurality of set information, key information corresponding to another one of the plurality of set information;

extracting the key generation path information of one part of the plurality of key generation path information from the plurality of key generation path information contained in the set relationship information; and

providing the key generation path information of one part extracted by the key generation path information extracting unit to the terminal device.

23. A key generation method for generating key information used for encryption or decryption of information, the method comprising the steps of:

acquiring key generation path information of one part of a plurality of key generation path information extracted from set relationship information including a plurality of set information each indicating different combinations of a plurality of terminal devices and a plurality of key generation path information indicating a key generation path for generating, from the key information corresponding to one of the plurality of set information, key information corresponding to another one of the plurality of set information; and

generating, from the key information corresponding to one of the plurality of set information, key information corresponding to another one of the plurality of set information based on the key generation path information of one part.

**FIG. 1**

EP 2 139 153 A1

# FIG. 2

<u>102,122</u>

CONTROLLER ~202

CALCULATION UNIT ~204

INPUT/OUTPUT DEVICE ◄─────► INPUT/OUTPUT INTERFACE ~206

SECURE STORAGE UNIT ~208

MAIN STORAGE UNIT ~210

NETWORK INTERFACE ~212 ◄─────► NETWORK

MEDIA INTERFACE ~216

218

BUS

EP 2 139 153 A1

# FIG. 3

**FIG. 4**

# FIG. 5

START

↓

DETERMINE AND PUBLICIZE n , λ , k, PRSG — S102

↓

DETERMINE AND PUBLICIZE SET SYSTEM SS OF USER — S104

↓

DETERMINE AND PUBLICIZE GRAPH H — S106

↓

DETERMINE INTERMEDIATE KEY OF EACH SUBSET — S108

↓

DISTRIBUTE NECESSARY INTERMEDIATE KEY TO EACH USER — S110

↓

END

# FIG. 6

```
          ┌─────────────┐
          │    START    │
          └─────────────┘
                 │
                 ▼
   ┌──────────────────────────────┐
   │     DETERMINE R AND N\R       │────S112
   └──────────────────────────────┘
                 │
                 ▼
   ┌──────────────────────────────┐
   │ DETERMINE m S_i IN WHICH SUM  │
   │    OF SETS MATCHES N\R        │────S114
   └──────────────────────────────┘
                 │
                 ▼
   ┌──────────────────────────────┐
   │ ENCRYPT mek WITH KEY OF EACH  │
   │            S_i                │────S116
   └──────────────────────────────┘
                 │
                 ▼
   ┌──────────────────────────────┐
   │     TRANSMIT INFORMATION      │
   │ REPRESENTING N\R OR EACH S_i  │────S118
   │            AND m              │
   └──────────────────────────────┘
                 │
                 ▼
          ┌─────────────┐
          │     END     │
          └─────────────┘
```

# FIG. 7

START

TRANSMIT INFORMATION REPRESENTING N\R OR EACH $S_i$ AND m ENCRYPTED TEXT — S120

SEARCH FOR $S_i$ TO WHICH IT BELONGS — S122

S124

$S_i$ FOUND

NO

YES

DERIVE KEY OF $S_i$ — S126

OUTPUT "ELIMINATED" — S130

DECRYPT CORRESPONDING ENCRYPTED TEXT WITH KEY OF $S_i$ AND OUTPUT mek — S128

END

# FIG. 8

102

KEY DISTRIBUTION SERVER

KEY GENERATION LOGIC BUILDING BLOCK

TREE STRUCTURE SETTING UNIT ~104

COORDINATE AXIS SETTING UNIT ~106

TEMPORARY DIGRAPH GENERATION UNIT ~108

DIGRAPH GENERATION UNIT ~110

INFORMATION GENERATION BLOCK

120 ~ SUBSET DETERMINATION UNIT

121 ~ PATH INFORMATION GENERATION UNIT

KEY GENERATION BLOCK

INITIAL INTERMEDIATE KEY SETTING UNIT ~112

KEY GENERATION UNIT ~114

ENCRYPTION UNIT ~116

COMMUNICATION UNIT ~118

# FIG. 9

START

LINE ELEMENTS OF $l_v \rightarrow r_v$-1 SUCH THAT INCLUSION RELATION BECOMES LARGER FROM LEFT TO RIGHT ON HORIZONTAL LINE
LEFTMOST COORDINATE POINT IS STARTING POINT
ARRANGE TWO TEMPORARY COORDINATE POINTS ON RIGHT OF RIGHTMOST COORDINATE POINT
LENGTH FROM STARTING POINT TO RIGHTMOST TEMPORARY COORDINATE POINT IS $L_v = r_v - l_v + 1$
CALCULATE INTEGER x SATISFYING $n^{(x-1)/k} < L_v \leqq n^{x/k}$
(WHERE $1 \leqq x \leqq k$)

~S140

PERFORM FOLLOWING OPERATION WHILE MOVING COUNTER i FROM 0 TO x-1
STARTING FROM STARTING POINT, CONTINUOUSLY JUMP TO COORDINATE POINT SPACED APART BY DISTANCE $n^{i/k}$ UNTIL REACHING TEMPORARY COORDINATE POINT OR NEXT JUMP EXCEEDS TEMPORARY COORDINATE POINT
DRAW DIRECTIONAL BRANCH CORRESPONDING TO EACH JUMP

~S142

ERASE ALL DIRECTIONAL BRANCHES REACHING TEMPORARY COORDINATE POINT

~S144

IF PLURAL DIRECTIONAL BRANCHES REACH CERTAIN COORDINATE POINT T, ERASE DIRECTIONAL BRANCHES OTHER THAN DIRECTIONAL BRANCH HAVING LONGEST JUMP DISTANCE

~S146

END

# FIG. 10

EP 2 139 153 A1

# FIG. 11

START

↓

| DETERMINE LP | ~S150 |

↓

| DETERMINE PLP | ~S152 |

↓

| REPLACE DIRECTIONAL BRANCH | ~S154 |

↓

END

## FIG. 12

```
                    ┌──────────────┐
                    │    START     │
                    └──────┬───────┘
                           │                              ⌇ S160
                           ▼
┌────────────────────────────────────────────────────────────────────────┐
│                                                                          │
│  SET t = n^{1/k}-1                                                       │
│                                                                          │
│  J(a, b): REPRESENT PERFORM JUMP OF DISTANCE b FOR a TIMES               │
│                                                                          │
│  PATH OF [1,1] TO [1,n] OF GRAPH I'(1→n)                                 │
│                                                                          │
│  J(t,n^{(k-1)/k}), J(t,n^{(k-2)/k}), ..., J(t, n^{1/k}), J(t,n^{0/k})    │
│  ARE OBTAINED                                                            │
│                                                                          │
│  THIS PATH IS CALLED Longest Path (LP), AND active MARK IS GIVEN TO ALL  │
│  JUMPS ON LP                                                             │
│                                                                          │
│  NUMBER OF TIMES OF JUMP OF LP IS DD_T                                   │
│                                                                          │
│  DD_T = k(n^{1/k}-1)                                                     │
│                                                                          │
└────────────────────────────────────────────────────────────────────────┘
                           │
                           ▼
                    ┌──────────────┐
                    │     END      │
                    └──────────────┘
```

$$\text{SET } t = n^{1/k}-1$$

$J(a, b)$: REPRESENT PERFORM JUMP OF DISTANCE $b$ FOR $a$ TIMES

PATH OF [1,1] TO [1,n] OF GRAPH $I'(1 \rightarrow n)$

$J(t, n^{(k-1)/k})$, $J(t, n^{(k-2)/k})$, ..., $J(t, n^{1/k})$, $J(t, n^{0/k})$ ARE OBTAINED

THIS PATH IS CALLED Longest Path (LP), AND active MARK IS GIVEN TO ALL JUMPS ON LP

NUMBER OF TIMES OF JUMP OF LP IS $DD_T$

$$DD_T = k(n^{1/k}-1)$$

# FIG. 13

START

S162

IF I'(a→b), CURRENT PATH FROM [a,a] TO [a,b], OR IF I'(a←b), CURRENT PATH FROM [b,b] TO [b,a] IS CP

S164

FIND JUMP IN CP WITH MAXIMUM DISTANCE AND SET RELEVANT DISTANCE AS J

S166

YES ← $J \leq 1$

NO

S168

NO ← $\# JP(CP) + t \leq DD_T$

YES

S170

OBTAIN j SATISFYING $J = n^{j/k}$

S172

FIND MOST DISTANT JUMP FROM STARTING POINT OF CP OF JUMPS OF DISTANCE J INCLUDED IN CP

S174

WRITE ONE JUMP OF DISTANCE $n^{(j-1)/k}$ IMMEDIATELY AFTER t JUMP OF DISTANCE $n^{(j-1)/k}$ ALREADY EXISTING FROM STARTING POINT OF FOUND JUMP, AND ERASE ORIGINAL (FOUND) JUMP

S176

SET CP AS PLP, AND GIVE active MARK TO ALL JUMPS ON CP

END

# FIG. 14

```
( START )
```

S180

FIND JUMP OF MAXIMUM JUMP DISTANCE J' OF active AND NON-PERFORMED (WITHOUT "done" MARK) IN GRAPH. IF IN PLURALS, SELECT MOST DISTANT FROM STARTING POINT OF GRAPH. THIS JUMP IS CALLED Working Jump (WJ). STARTING POINT OF WJ IS $WJ_S$ AND ENDING POINT IS $WJ_E$. NUMBER OF JUMPS OF PATH FROM STARTING POINT OF GRAPH TO $WJ_E$ IS D

S182  YES  $J' \leq 1$

NO

S184

CURRENT PATH FROM $WJ_S$ TO $WJ_E$-1 IS CP. $WJ_E$-1 IS ELEMENT ONE BEFORE $WJ_E$

S186

FIND JUMP WITH MAXIMUM DISTANCE IN JUMPS OF CP AND SET DISTANCE AS J

S188  YES  $J \leq 1$

NO

S190  NO  $\#\mathrm{JP}(\mathrm{CP}) + t \leq \mathrm{DD_T} - D$

YES

S192

OBTAIN j SATISFYING $J = n^{j/k}$

S194

FIND MOST DISTANT JUMP FROM STARTING POINT OF CP OF JUMPS OF DISTANCE J INCLUDED IN CP

S196

WRITE ONE JUMP OF DISTANCE $n^{(j-1)/k}$ IMMEDIATELY AFTER t JUMP OF DISTANCE $n^{(j-1)/k}$ ALREADY EXISTING FROM STARTING POINT OF FOUND JUMP, AND ERASE ORIGINAL (FOUND) JUMP

S198

GIVE active MARK TO ALL JUMPS ON CP

S200

GIVE done MARK TO WJ

S202

ERASE ALL JUMPS WITHOUT active MARK, AND COLLECTION OF ALL JUMPS WITH active MARK IS E(I(a→b)) OR E(I(a←b))

```
( END )
```

**FIG. 15**

EP 2 139 153 A1

# FIG. 16

FIG. 17

EP 2 139 153 A1

**FIG. 18**

# FIG. 19

122

TERMINAL DEVICE

| COMMUNICATION UNIT | ~124 |

↓

| JUDGMENT UNIT | ~126 |

↓

| KEY GENERATION UNIT | ~128 |

↓

| DECRYPTION UNIT | ~130 |

# FIG. 20

START

$IP_{i,p} = TP_i$ — S402

COUNTER J = 1 — S404

YES ◁ u INCLUDED IN $[SP_i, IP_{i,j}]$? — S406

↓ NO

INCREMENT COUNTER j — S408

$sp = SP_i, ep = IP_{i,j}$ — S410

$t_{current} = t([\,sp,\,ep\,])$ — S412

YES ◁ $ep = TP_i$ — S414

↓ NO

$logd = \log_{n^{1/k}} \left| IP_{i,j+1} - IP_{i,j} \right|$ — S416

INCREMENT COUNTER j — S418

$ep = IP_{i,j}$ — S420

logd+1$^{TH}$ PORTION OF OUTPUT OF PRSG ($t_{current}$) AS NEW $t_{current}$ — S422

k+1$^{TH}$ PORTION OF OUTPUT OF PRSG ($t_{current}$) OUTPUT AS $k([SP_i, TP_i])$ — S424

END

# FIG. 21

START

IP$_{i,0}$ = SP$_i$ — S432

sign = 1 IF SP$_i$ IS ODD NUMBER, — S434
sign = -1 IF EVEN NUMBER

$$IP_{i,j} = IP_{i,j-1} + sign * n^{LD_{i,j}/k}$$ — S436
FOR COUNTER j = 1 TO p

COUNTER j = 0 — S438

YES

u INCLUDED IN [SP$_i$, IP$_{i,j}$] ? — S440

↓ NO

INCREMENT COUNTER j — S442

sp = SP$_i$, ep = IP$_{i,i}$ — S444

t$_{current}$ = t([ sp, ep ]) — S446

YES

ep = IP$_{i,p}$ — S448

↓ NO

INCREMENT COUNTER j — S450

ep = IP$_{i,i}$ — S452

LD$_{i,j}$+1$^{TH}$ PORTION OF OUTPUT OF — S454
PRSG (t$_{current}$) AS NEW t$_{current}$

k+1$^{TH}$ PORTION OF OUTPUT OF — S456
PRSG (t$_{current}$) OUTPUT AS([SP$_i$,IP$_{i,p}$])

END

**FIG. 22**

BROADCAST
SATELLITE — 306

300

SATELLITE
BROADCAST STATION

302

MANAGEMENT
CENTER

304

308
RESIDENCE
RECEIVER

310

308
RESIDENCE
RECEIVER

310

308
RESIDENCE
RECEIVER

310

EP 2 139 153 A1

**FIG. 23**

400

MEDIUM MANUFACTURER — 402

MANAGEMENT CENTER — 404

406

MEDIUM

DISTRIBUTION OUTLET

408

406

MEDIUM

RESIDENCE — 412

RECEIVER

414

EP 2 139 153 A1

## INTERNATIONAL SEARCH REPORT

| | International application No. |
|---|---|
| | PCT/JP2008/051745 |

A. CLASSIFICATION OF SUBJECT MATTER
*H04L9/08*(2006.01)i

According to International Patent Classification (IPC) or to both national classification and IPC

B. FIELDS SEARCHED

Minimum documentation searched (classification system followed by classification symbols)
H04L9/08

Documentation searched other than minimum documentation to the extent that such documents are included in the fields searched
Jitsuyo Shinan Koho        1922-1996   Jitsuyo Shinan Toroku Koho   1996-2008
Kokai Jitsuyo Shinan Koho   1971-2008   Toroku Jitsuyo Shinan Koho   1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | Nuttapong Attrapadung et.al, "Subset Incremental Chain Based Broadcast Encryption with Shorter Ciphertext", Dai 28 Kai Symposium on Information Theory and its Applications Yokoshu, No.28, Vol.1, 2005.11.20, p.57-p.60 | 1-23 |
| Y | JP 2006-74392 A  (Canon Inc.), 16 March, 2006 (16.03.06), Par. Nos. [0067] to [0082] & WO 2006/025589 A1 | 1-23 |

☐ Further documents are listed in the continuation of Box C.        ☐ See patent family annex.

| | |
|---|---|
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |
| Date of the actual completion of the international search<br>17 April, 2008 (17.04.08) | Date of mailing of the international search report<br>01 May, 2008 (01.05.08) |
| Name and mailing address of the ISA/<br>Japanese Patent Office | Authorized officer |
| Facsimile No. | Telephone No. |

Form PCT/ISA/210 (second sheet) (April 2007)

60

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2006310182 A
- JP 2006310213 A

- JP 2006310226 A

**Non-patent literature cited in the description**

- **Nuttapong Attrapadung ; Hideki Imai.** Subset Incremental Chain Based Broadcast Encryption with Shorter Ciphertext. *The 28th Symposium on Information Theory and Its Applications,* 2005